# EUROPEAN PATENT APPLICATION

(11) **EP 1 249 775 A2**
(43) Date of publication of application: **16.10.2002**
(21) Application number: 01308056.9
(22) Date of filing: 21.09.2001
(51) Int. Cl.: G06F 17/60

(54) **Logistics management system managing distribution and schedule of products from order-acceptance to delivery, using a computer**

(30) Priority: 22.09.2000 JP 2000288569; 31.01.2001 JP 2001023844
(71) Applicant: SHARP KABUSHIKI KAISHA, Osaka 545-8522 (JP)
(72) Inventor: Yamamoto, Masaaki, Yao-shi, Osaka (JP); Suzuki, Yoshitaka, Kitakatsuragi-gun, Nara (JP); Sounai, Norimasa, Yamatotakada-shi, Nara (JP); Shima, Kazunari, Soraku-gun, Kyoto (JP); Takada, Kiyohiko, Ikoma-gun, Nara (JP); Ehiro, Masayuki, Izumi-shi, Osaka (JP); Morita, Teruaki, Kitakatsuragi-gun, Nara (JP)
(74) Representative: Brown, Kenneth Richard

(57) **Abstract**

A server apparatus includes a receiving circuit receiving order-acceptance information from a user, a user management database (120) storing the order-acceptance information and expectation information of production and distribution, a production management database (130) storing production state information and production instruction information, a distribution management database (140) storing distribution state information and distribution instruction information, a standard process step database (170) storing production standard process step information and distribution standard process step information, and a schedule control unit (110) controlling the expectation information (122), the distribution instruction information (142) and the production instruction information (132) based on the order-acceptance information (121), the distribution state information (122), the production state information (131), the production standard process step information (171) and the distribution standard process step information (172).

## Description

### BACKGROUND OF THE INVENTION

### Field of the Invention

The present invention relates to a logistics management system managing distribution and schedule of products from order-acceptance to delivery, using a computer. More specifically, the present invention relates to a logistics management system in which order acceptance process steps, production process steps and distribution process steps are controlled in a centralized manner to enable efficient operations, as well as to a server apparatus and a terminal apparatus used in the system.

### Description of the Background Art

For a retailer, buying-in goods to be supplied to customers quickly in response to the actual demand of the goods is an important factor for the business. It would be extremely advantageous for business to seize an expected business chance, by selecting goods having as short a lead time as possible from placing an order to delivery, by frequently confirming the production progress state of the goods to be stocked and to quickly adjust the contents of buy-in. This is the same for a so-called build-to-order manufacturer that manufactures products in accordance with orders placed by users.

Japanese Patent Laying-Open No. 10-40309 discloses a system of managing progress of processing of ordered works using a host computer to reduce the lead time, in the printing industry. By this system, it is possible to quickly obtain information related to the process procedures, operation process steps and operation unit, from order-acceptance to shipment and delivery. It is also possible by this system to confirm the progress of operations.

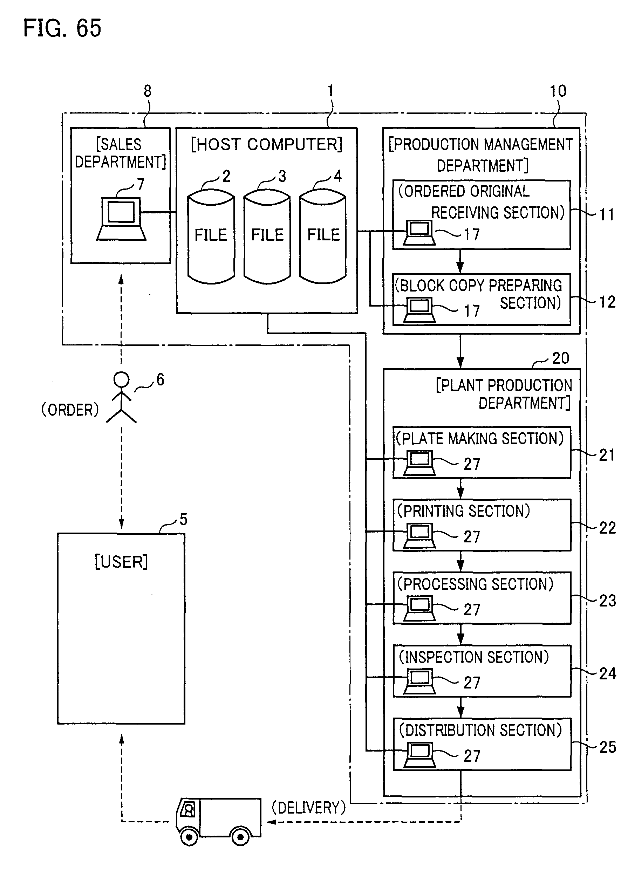

Referring to Fig. 65, the system for managing progress of operations of the ordered works includes a host computer 1, an on-line terminal 7 connected to host computer 1 and installed in a sales department 8, an on-line terminal 17 connected to host computer 1 and installed in ordered original receiving section 11 and a block copy preparing section 12 of production management department, and an on-line terminal 27 connected to host computer 1 and installed in a plate making section 21, a printing section 22, a processing section 23, an inspection section 24 and a distribution section 25 of plant production department 20.

Host computer 1 includes a process procedure information file 2 storing information related to various process procedures such as works to be done by sales personnel themselves corresponding to the product for which order by a user 5 is received by sales personnel 6; an operation process steps and operation section information file 3 storing operation process steps information, process steps capability of operating sections and the like for every ordered product; and an operation progress information file recording progress information of operations based on a management number determined for every ordered product.

A work of which order is received by sales personnel 6 is processed in the following manner. First, an order form or the like is input to host computer 1 at production management department 10. A work proceeds to process steps 21 to 25 of the plant production department 20. After the process steps 21 to 25 of the plant production department 20, the products are delivered by distribution section 25 to the user, and thus the series of operations for the work is finished.

On-line terminal 27 is placed at each section for each process step of the plant production department 20. Information related to the date and time at the stage when the processing for the works starts and the date and time of the stage when the process is finished, information related to the quantity of production and the like are input through on-line terminal 27.

As described above, the operation progress information for each process step is stored in the operation progress information storage file 4 from time to time. Therefore, when sales personnel 6 wishes to confirm current progress state of his work, it is possible to confirm the progress state of the work immediately, by making an access to host computer 1 from on-line terminal 7 installed in the sales department 8.

Where it is necessary to make use of expensive production facilities, labor and transportation means with high efficiency as in the case of semiconductor industry, for example, it is necessary for the made-to-order manufacture not only to confirm the operation progress information directly by using a host computer but also to establish an optimal production distribution plan.

In the conventional system, it is impossible for the user to directly confirm the operation progress information. For a user who buys a large number of parts and manufactures goods, it is necessary to confirm the progress state in the distribution step or the progress state of production, in order to adjust the overall process steps of manufacturing the goods, if it is necessary to absorb delay or troubles experienced during production or distribution to suppress influence on the manufacture of the goods. Conventionally, it has been necessary to confirm the progress state of the distribution step and the progress state of production by telephone, facsimile or by man power. Therefore, the conventional system has a problem that satisfactory adjustment by the user is difficult.

In the above described system, it is impossible to grasp the state of distribution in the distribution process. Assume that the ordered product is a semiconductor. The production process steps is classified into a former process step and a latter process step. If the plant for the former process step and the plant for the latter process step are located at different places, it is necessary to ask a distributer to deliver semi-finished products from the plant of the former process step to the plant of the latter process step. Generally, it takes 3 to 5 days for domestic delivery and about 7 to 10 days for delivery abroad, of the semi-finished products.

Therefore, if it is impossible to grasp the state of distribution, there would possibly be a loss time in the step of distribution of semi-finished products, among the production process steps. As a result, it becomes impossible for the production side to make use of the expensive production facilities and labor at high efficiency, resulting in delay in production, eroding reliance by the customer. In addition, the cost of manufacturing increases and the profit decreases. Further, conventionally, where a plurality of distributers handle the finished ordered products, handing over between the distributers have not been well coordinated. This results in discontinuity of distribution, necessitating storage at a depository in the middle of the distribution step.

### SUMMARY OF THE INVENTION

An object of the present invention is to provide a logistics management system enabling delivery of the ordered products to the user in as short a period as possible, as well as to provide a server apparatus and a terminal apparatus therefor.

According to an aspect, the present invention provides a server apparatus including: a reception circuit receiving order-acceptance information from a user; a user management database having an order-acceptance information storing unit that stores the order-acceptance information and a production and distribution expectation information storing unit that stores expectation information of production and distribution; a production management database having a production state information storing unit that stores production state information and a production instruction information storing unit that stores production instruction information; a distribution management database having a distribution state information storing unit that stores distribution state information and a distribution instruction information storing unit that stores distribution instruction information; a standard process step database having a production standard process step information storing unit that stores production standard process step information and a distribution standard process step information storing unit that stores distribution standard process step information; and a schedule control unit connected to the reception circuit, the user management database, the production management database, the distribution management database and the standard process step database, for controlling expectation information, distribution instruction information and production instruction information, based on the order-reception information, distribution state information, production state information, production standard process step information and distribution standard process step information.

The schedule control unit controls the expectation information, distribution instruction information and production instruction information, based on the order-acceptance information, distribution state information, production state information, production standard process step information and distribution standard process step information. Therefore, it becomes possible to manage in a centralized manner, the progress state from placement of an order of the product by a user, through production, distribution to delivery. Therefore, it becomes possible to establish optimal production plan and distribution plan, and to efficiently make use of the production facility, labor and transportation means.

Preferably, the server apparatus further includes a transmission circuit for externally transmitting the progress state information and/or expectation information stored in the production distribution expectation information storing unit. It becomes possible to transmit the progress state information and/or expectation information to the terminal apparatus of the user, of the production side and of the distributing side. Thus, it becomes possible for the user or the personnel of the production side or distribution side to directly confirm the progress state information of production or distribution, by checking the progress state information, the production state information and the distribution state information.

According to another aspect, the present invention provides a server apparatus including: a reception circuit receiving order-acceptance information from a user; a user management database having an order-acceptance information storing unit that stores the order-acceptance information and a production and distribution progress state information storing unit that stores progress state information of production and distribution; a production management database having a production state information storing unit that stores the production state information; a distribution management database having a distribution state information storing unit that stores a distribution state information; and a schedule control unit connected to the reception circuit, the user management database, the production management database and the distribution management database, for controlling the progress state information based on the order-acceptance information, the distribution state information and the production state information.

The schedule control unit controls the progress state information, based on the order-acceptance information, the distribution state information and the production state information.

Preferably, the server apparatus further includes a transmission circuit for externally transmitting the progress state information stored in the production and distribution progress state information storing unit.

It becomes possible to transmit the progress state information to a terminal apparatus on the user side, the production side and the distribution side. Thus, it becomes possible for the user and the personnel on the production side and the distribution side to directly confirm the progress state information of production or distribution, by checking the progress state information and the production state information.

More preferably, the schedule control unit controls the expectation information when there is an inquiry from the user in connection with the order-acceptance information, based on the inquired order-acceptance information, the distribution state information, the production state information, the production standard process step information and the distribution standard process step information, and does not control the production instruction information and the distribution instruction information.

When there is an inquiry from the user, the production instruction information and the distribution instruction information are not given to the personnel on the production side and the personnel on the distribution side. Thus, it is possible for the user to perform only the confirmation operation.

More preferably, when the order-acceptance information from the user is a preliminary order or a final order, the schedule control unit controls the progress state information, the expectation information, the distribution instruction information and the production instruction information, based on the order-acceptance information, the distribution state information and the production state information.

When the order-acceptance information from the user is a preliminary order or a final order, the production instruction information and the distribution instruction information are applied respectively to the personnel of the production side and the personnel on the distribution side. This enables efficient operation by each personnel.

According to a still further aspect, the present invention provides a logistics management system, including: the server apparatus described above; a user side terminal apparatus connected through a communication circuit to the server apparatus, transmitting product order-acceptance information to the server apparatus and outputting the product and distribution progress state information and the expectation information of the order product, based on the progress state information and the expectation information received from the server apparatus; a production side terminal apparatus connected through a communication circuit to the server apparatus, outputting production instruction information, and writing result of production operation performed based on the output production instruction information to a production state information storing unit; and a distributing side terminal apparatus connected through a communication circuit to the server apparatus, outputting distribution instruction information, and writing result of distributing operation performed based on the output distribution instruction information to a distribution state information storing unit.

It becomes possible for the user to directly confirm the progress state information and the expectation information for each of production and distribution.

According to a still further aspect, the terminal apparatus in accordance with the present invention is a user side terminal apparatus used in the above described logistics management system. The terminal apparatus includes a transmission circuit transmitting the order-acceptance information to the order-acceptance information storing unit, and a reception circuit receiving the progress state information and the expectation information stored in the production and distribution progress state/expectation information storing unit.

According to a still further aspect, the terminal apparatus in accordance with the present invention is a distribution side terminal apparatus used in the above described logistics management system. The terminal apparatus includes a reception circuit receiving the distribution instruction information stored in the distribution instruction information storing unit and the progress state information and expectation information stored in the production and distribution progress state/expectation information storing unit, and a transmission circuit transmitting the result of distributing operation performed based on the received distribution instruction information to the distribution state information storing unit.

Preferably, the distribution side terminal apparatus is a mobile terminal apparatus.

According to a still further aspect, the present invention provides a logistics management method used in the above described server apparatus. The logistics management method includes the steps of: receiving the order-acceptance information from a user side terminal apparatus; writing the received order-acceptance information to the user management database; and based on the order-acceptance information, the distribution state information managed by the distribution management database, the production state information managed by the production management database, and the production standard process step information and the distribution standard process step information managed by the standard process step database, for the schedule control unit, controlling the expectation information of production and distribution managed by the user management database, the production instruction information managed by the production management database and the distribution instruction information managed by the distribution management database.

The schedule control unit controls the expectation information, the distribution instruction information and the production instruction information, based on the order-acceptance information, the distribution state information, the production state information, the production standard process step information and the distribution standard process step information. Therefore, it becomes possible to control in a centralized manner, the progress state from placement of an order of a product by a user through production and distribution until the end of delivery. Thus, it becomes possible to establish optimal production plan and distribution plan, and to efficiently make use of the production facility, labor and transportation means.

According to a still further aspect, the logistics management method of the present invention is used in the above described server apparatus. The logistics management method includes the steps of: receiving the order-acceptance information from a user side terminal apparatus; writing the received order-acceptance information to the user management database; and based on the order-acceptance information, the distribution state information managed by the distribution management database and the production state information managed by the production management database, for the schedule control unit, controlling the progress state information of production and distribution managed by the user management database.

The schedule control unit controls the progress state information, based on the order-acceptance information, the distribution state information and the production state information. Therefore, it is possible for the user, the personnel of the production side and the personnel of the distribution side to directly confirm the progress state information of production or distribution, by checking the progress state information, the production state information and the distribution state information, respectively.

According to a still further aspect, the present invention provides a schedule control apparatus, including: a program storing apparatus storing a program; a central processing unit for executing processing in accordance with the program stored in the program storing apparatus; a temporarily storage for temporarily storing the contents processed by the central processing unit; and a connection circuit for inputting/outputting the order-acceptance state from the user, current production state information corresponding to the order-acceptance information and the current distribution state corresponding to the order-acceptance information and the progress state information corresponding to the order-acceptance information. The program storing apparatus stores a program that controls the progress state information of production and distribution, based on the order-acceptance information, the production state information and the distribution state information.

According to a still further aspect, the present invention provides a schedule control unit, including: a program storing apparatus storing a program; a central processing unit for executing processing in accordance with the program stored in the program storing apparatus; a temporary storage apparatus for temporarily holding contents processed by the central processing unit; and a connection circuit for inputting/outputting the order-acceptance information from a user, production state information corresponding to the order-acceptance information, the distribution state information corresponding to the order-acceptance information, the production standard process step information as the time necessary for each production process step, the distribution standard process step information as the time necessary for each distribution process step, expectation information corresponding to the order-acceptance information, the production instruction information as an instruction to the production personnel and distribution instruction information as the instruction to the distribution personnel. In the program storing apparatus, a program is stored, which controls the expectation information, the production instruction information and the distribution instruction information, based on the order-acceptance information, the production state information, the distribution state information, the production standard process step information and the distribution standard process step information.

According to a still further aspect, the present invention provides a schedule control apparatus, including: a program storing apparatus storing a program; a central processing unit for executing processing in accordance with the program stored in the program storing apparatus; a temporary storage for temporarily holding contents processed by the central processing unit; and a connection circuit for inputting/outputting the order-acceptance information from a user; the progress state information corresponding to the order-acceptance information; the production state information corresponding to the order-acceptance information; the distribution state information corresponding to the order-acceptance information; the production standard process step information as the time necessary for each production process step; the distribution standard process step information as the time necessary for each distribution process step; the expectation information corresponding to the order-acceptance information; the production instruction information as the instruction to the production personnel and the distribution instruction information as the instruction to the distribution personnel. The program storing apparatus stores a program that simultaneously control the progress state information, the expectation information, the production instruction information and the distribution instruction information, based on the order-acceptance information, the product state information, the distribution state information, the production standard process step information and the distribution standard process step information.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram representing a hardware configuration of the logistics management system in accordance with an embodiment of the present invention.
Fig. 2 is a block diagram representing hardware configuration of the server system.
Fig. 3 shows an example of the order-acceptance information stored in the order-acceptance information storing unit of the user management DB (Data Base).
Fig. 4 shows an example of the progress state information and the expectation information stored in the production and distribution progress state/expectation information storing unit of the user management DB.
Fig. 5 shows an example of the production state information stored in the production state information storing unit of the production management DB.
Fig. 6 shows correspondence between the process steps and the process step identification numbers (Nos.)
Fig. 7 shows the correspondence between the process steps in the former process and the process step numbers (Nos.)
Fig. 8 shows correspondence between the process steps in the latter process and the process step numbers (Nos.)
Fig. 9 shows an information of the production instruction information stored in the production instruction information storing unit of the production management DB.
Fig. 10 shows an example of the distribution state information stored in the distribution state information storing unit of the distribution management DB.
Fig. 11 shows correspondence between the process steps of transportation from the former half to the latter half process and the process step numbers (Nos.)
Fig. 12 shows correspondence between the process steps of transportation from the latter half process to the user and the process step numbers (Nos.)
Fig. 13 shows an example of the distribution instruction information stored in the distribution instruction information storing unit of the distribution management DB.
Fig. 14 shows an example of product brochure information stored in a brochure DB.
Fig. 15 shows an example of security information stored in a security management DB.
Fig. 16 shows user evaluation levels and contents there of.
Fig. 17 shows an example of the product standard process step information stored in the production standard process step information storing unit of the standard process step DB.
Fig. 18 shows an example of the distribution standard process step information stored in the distribution standard process step information storing unit of the standard process step DB.
Fig. 19 is a block diagram representing hardware configuration of a schedule control unit 110.
Fig. 20 is a block diagram representing hardware configuration of the terminal apparatus.
Figs. 21 to 25 are flow charts representing the operation of the logistics management system.
Fig. 26 shows an example of a product ordering display.
Fig. 27 shows an example of the product standard process step information representing the method of calculating expected date of delivery stored in the production and distribution progress state/expectation information storing unit of the user management DB.
Fig. 28 shows an example of the distribution standard process step information illustrating the method of calculating expected date of delivery stored in the production and distribution progress state/expectation information storing unit of the user management DB.
Fig. 29 shows an example of the production standard process step information.
Fig. 30 shows an example of the production instruction information.
Fig. 31 shows an example of the distribution standard process step information.
Fig. 32 shows an example of the distribution instruction information.
Fig. 33 shows an example of an order confirmation display.
Fig. 34 shows an example of the production progress state searching display.
Fig. 35 shows an example of the production state information.
Fig. 36 shows an example of the production standard process step information.
Fig. 37 shows an example of the distribution standard process step information.
Fig. 38 shows an example of an inquiry result display.
Fig. 39 shows an example of the order-acceptance information, including a preliminary order.
Fig. 40 shows an example of the order-acceptance information after the preliminary order is changed to a final order.
Fig. 41 shows an example of the order-acceptance information including a preliminary order.
Fig. 42 shows an example of the order-acceptance information when a part of the preliminary order is changed to a final order.
Figs. 43 to 47 are flow charts representing the operation of the logistics management system.
Fig. 48 shows an example of a product ordering display.
Fig. 49 shows an example of the production standard process step information.
Fig. 50 shows an example of the distribution standard process step information.
Fig. 51 shows an example of the production standard process step information.
Fig. 52 shows an example of the production instruction information.
Fig. 53 shows an example of the distribution standard process step information.
Fig. 54 shows an example of the distribution instruction information.
Fig. 55 shows an example of the order confirmation display.
Fig. 56 shows an example of the production progress state searching display.
Fig. 57 shows an example of the production state information.
Fig. 58 shows an example of the production standard process step information.
Fig. 59 shows an example of the distribution standard process step information.
Fig. 60 shows an example of the production progress state searching display.
Figs. 61 to 64 show examples of the order-acceptance information.
Fig. 65 shows a configuration of the conventional system for managing work progress of ordered products.

### DESCRIPTION OF THE PREFERRED EMBODIMENTS

### Overall Configuration

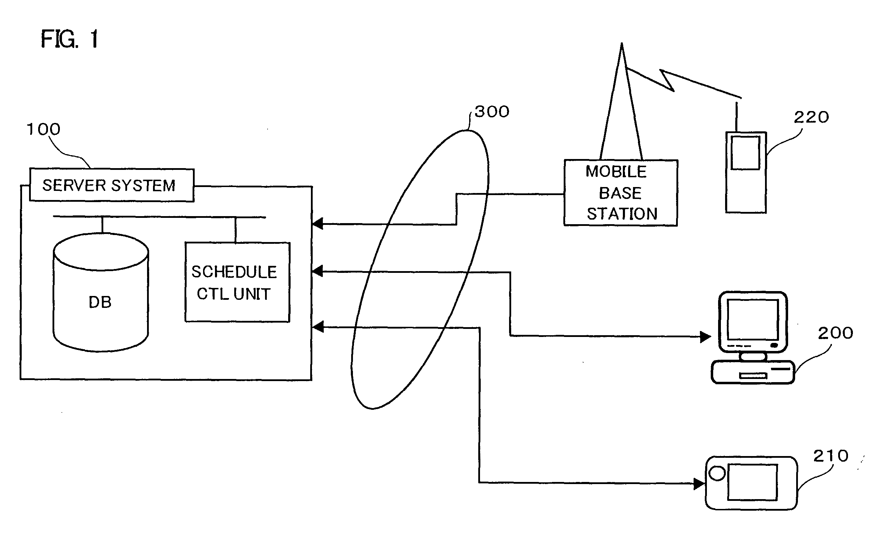

Referring to Fig. 1, the logistics management system in accordance with the present embodiment includes a server system 100, a user side terminal apparatus 200, a production side terminal apparatus 210, a distribution side terminal apparatus 220, and a bi-directional data communication path 300 provided for bi-directional communication between server system 100 and each of the terminal apparatuses 200 to 220. The data communication path is capable of bi-directional communication, and it may include the Internet, LAN (Local Area Network), a telephone circuit and mobile communication. The terminal apparatuses 200, 210 and 220 may be mobile terminal apparatuses or fixed terminal apparatuses such as personnel computers (PCs).

### Server System 100

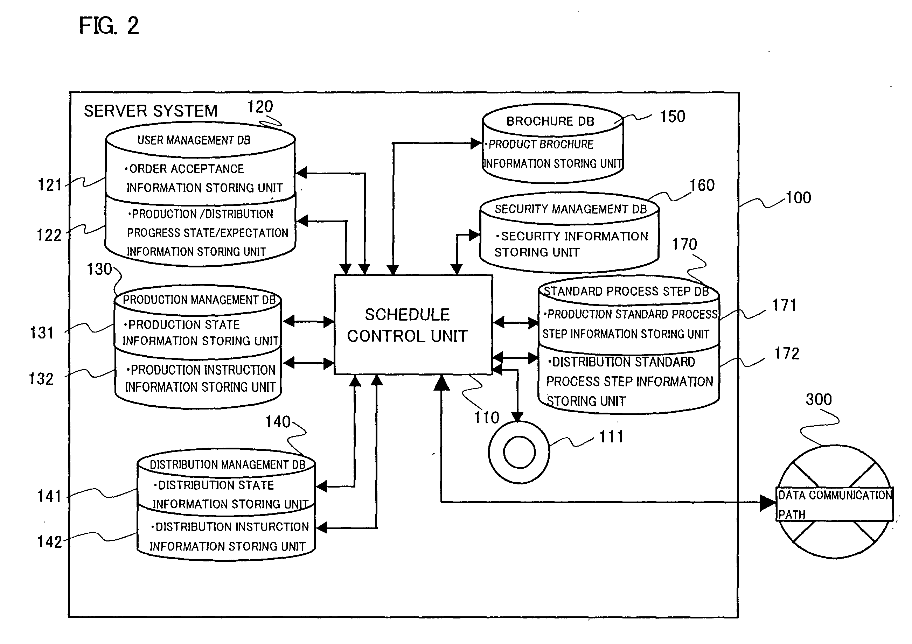

Referring to Fig. 2, server system 100 includes a user management DB (database) 120, a production management DB130, a distribution management DB140, a brochure DB150, a security management DB160, a standard process step DB 170, and a schedule control unit 110 connected to respective databases DB120 to 170 and bi-directional data communication path 300 for recalculating contents of DBs, providing contents of DBs to terminal apparatuses 200 to 220 and the like in accordance with instructions from terminal apparatuses 200 to 220.

### User Management DB120

User management DB120 includes an order-acceptance information storing unit 121 storing order-acceptance information related to an order-acceptance management ID (identification), and a production and distribution progress state/expectation information storing unit 122 storing the progress state information and expectation information of production and distribution.

The order-acceptance information is the information input by a user through the data communication path. The progress state information and the expectation information are calculated by the schedule control unit.

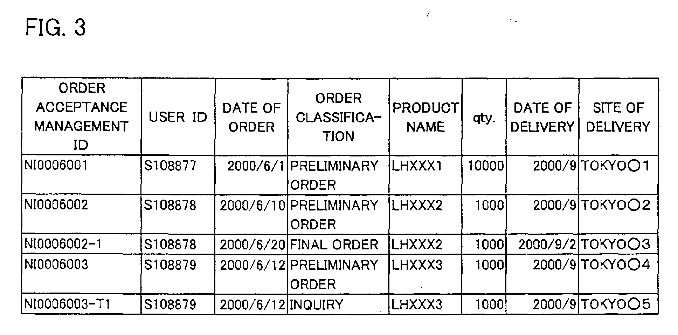

Referring to Fig. 3, the order-acceptance information stored in order-acceptance information storing unit 121 includes "order-acceptance management ID", "user ID", "date of order", "order classification", "product name", "quantity", "date of delivery" and "site of delivery".

"Order-acceptance management ID" refers to a number automatically allocated by the schedule control unit 110 of server system 100 every time the user places a preliminary order, including "company identification code + year and month + serial number + secondary number". Here, "company" is identical to "user". The secondary number is added to the order management ID when there is an inquiry or a final order. The secondary number for an inquiry is "- T + secondary number" and for the final order, " - secondary number".

"User ID" is a number issued by a server manager to enable user management, after examination by the sales department side.

"Date of order" represents the date when the user placed an order of the product.

"Order classification" includes "preliminary order", "final order" and "inquiry".

"Preliminary order" stands for a state where the date of delivery is not yet fixed.

"Final order" stands for the state where the date of delivery is established. In principle, "preliminary order" and "final order" impose the obligation of acceptance of the product on the user, once the act of order went through.

"Inquiry" stands for a state where there is an inquiry as to whether it is possible to change the term or site of delivery after "preliminary order" or "final order".

"Product name" represents the name of the product requested by the user. "Quantity" represents the quantity of the product requested by the user. "Date of Delivery" means the date of delivery of the products desired by the user. "Site of delivery" is the site of delivery desired by the user.

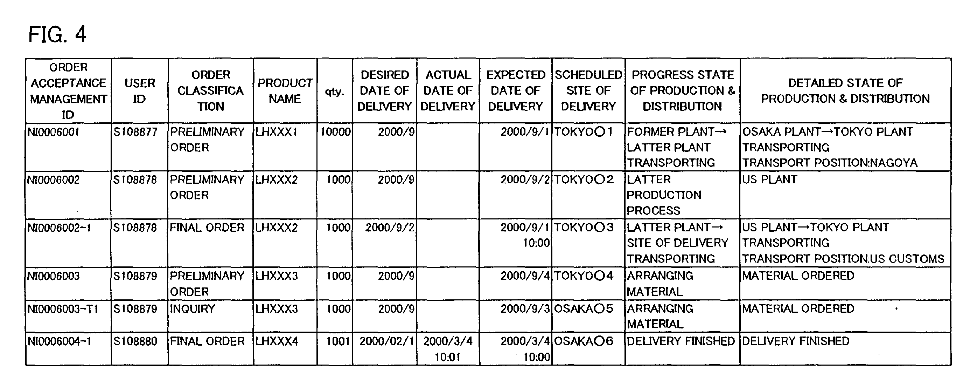

Referring to Fig. 4, the production and distribution progress state/expectation information storing unit 122 stores the progress state information and the expectation information.

The progress state information includes "order acceptance management ID", "user ID", "order classification", "product name", "quantity", "desired date of delivery", "actual date of delivery", "scheduled site of delivery", "production and distribution progress state" and "detailed state of production distribution".

The expectation information includes "order management ID", "user ID", "order classification", "product name", "quantity", "desired date of delivery", "expected date of delivery", "actual date of delivery" and "scheduled site of delivery".

"Order management ID", "user ID", "order classification", "product name" and "quantity" are the same as those described with reference to Fig. 3. Therefore, detailed description thereof will not be repeated here.

"Desired date of delivery" represents the date of delivery of the product desired by the user.

"Actual date of delivery" represents the date and time when the product is delivered to the user. Until the product is distributed to the user, this item is set to blank.

"Expected date of delivery" represents the expected date of delivery calculated by the server side, at a prescribed time point, based on the distribution state information (described later) and the production state information (described later). For final order, delivery time information is also included.

"Scheduled site of delivery" represents the site of delivery desired by the user.

"Production and distribution progress state" is classified into "former process step" "transportation step from former to latter process", "latter process step" and "transportation step from latter process to site of delivery", that are transmitted on real time basis from a production state information storing unit 131, which will be described later. After finished products are delivered to the user, "delivery finished" is set.

"Detailed state of production distribution" is the information providing further details of "production and distribution progress state" transmitted on real time basis from the production state information storing unit 131, which will be described later. For the transportation step, for example, information of the position on the way of transportation is included. After finished products are delivered to the user, "delivery finished" is set.

### Production Management DB130

Again referring to Fig. 2, production management DB130 includes production state information storing unit 131 and production instruction information storing unit 132 storing production state information and production instruction information, respectively related to order management ID.

The production state information is input from the production side every time the operation of each step is completed. The production instruction information is calculated by the schedule control means.

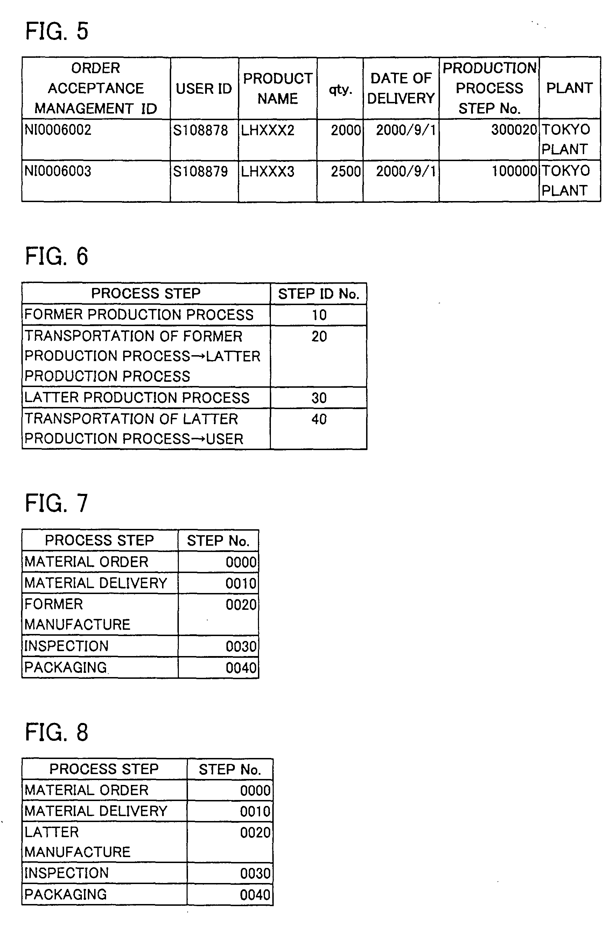

Referring to Fig. 5, the production state information stored in production state information storing unit 131 includes "order management ID", "user ID", "product name", "quantity", "date of delivery", "production step No." and "plant".

"Order management ID", "user ID" and "date of delivery" are the same as those described with reference to Fig. 3. Therefore, detailed description thereof will not be repeated here.

"Product name" represents the name of the products that are manufactured.

"Quantity" represents the quantity of the products that are manufactured.

"Production step No." represents the number indicating the state of progress in the production process of the product, which consists of a combination of "process step identification No." and "step No." The "process step identification No." corresponds to manufacturing transportation step divided into 4. "Step No." corresponds to the two production steps that are among the process steps divided into 4, with each of the two steps further divided into 5.

"Plant" represents the name of the plant where the products are manufactured.

"Process step identification No." is as shown in Fig. 6. When the production process step is among the former half process, the process step identification No. of "10" is allocated.

Figs. 7 and 8 represent "step Nos." in the former and latter process steps. For example, when "production step No." is "100030", it means that the process is proceeded to the inspection step of the former process.

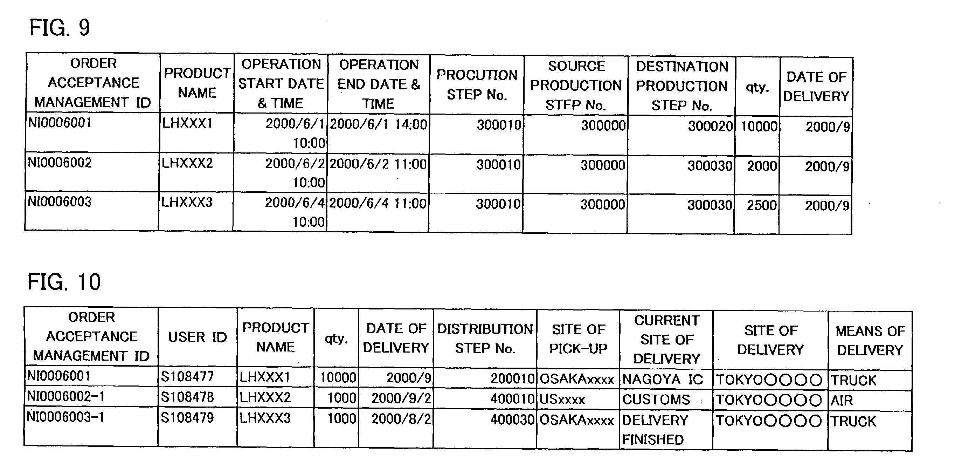

Referring to Fig. 9, the production instruction information stored in production instruction information storing unit 132 includes "order management ID", "product name", "operation start date and time", "operation end date and time", "operation production step No.", "source production step No.", "destination production step No.", "quantity" and "date of delivery".

"Order management ID", "user ID" and "date of delivery" are the same as those described with reference to Fig. 3. Therefore, detailed description thereof will not be repeated here.

"Product name" represents the name of the product of which production operation is scheduled. "Operation start date and time" represents the scheduled date and time when the production operation is to be started. "Operation end date and time" represents the date and time when the production operation is to be finished.

"Operation production step No." represents the production step No. representing the step of which production operation is carried out at the operation start date and time.

"Source production step No." represents the production step No. of the side from which the product is fed to the production operation step at the operation start date and time. "Source production step No." may represent distribution.

"Destination production step No." represents the production step No. to which the product is fed next, from the production operation step at the operation end date and time. "Destination production step No." may be distribution.

"Quantity" represents the quantity of the product of which operation is scheduled at the production operation step No.

### Distribution Management DB140

Again referring to Fig. 2, distribution management DB140 includes a distribution state information storing unit 141 and a distribution instruction information storing unit 142, storing distribution state information and distribution instruction information respectively related to order management ID.

The distribution state information is input from the distribution side every time the operation of each step is completed. The distribution instruction information is calculated by the schedule control means.

Referring to Fig. 10, the distribution state information storing unit 141 stores the distribution state information including "order management ID", "user ID", "product name", "quantity", "date of delivery", "distribution step No.", "pick-up site", "current site of distribution", "site of delivery" and "distribution means". "Order management ID", "user ID" and "date of delivery" are the same as those described with reference to Fig. 3. Therefore, detailed description thereof will not be repeated here.

"Product name" represents the name of the product which is being distributed. "Quantity" represents the quantity of the product which is being distributed.

"Distribution step No." is the number representing the state of progress in the distribution process of the product, and it consists of a combination of "process step identification No." and "step No.". "Process step identification No." corresponds to manufacturing transportation step divided into 4, and "step No." corresponds to two steps representing distribution process among the steps divided into four, with each of the two steps being further divided into 3 or 4.

"Process step identification No." is as shown in Fig. 6. For example, when the distribution step corresponds to the transportation step from the former half to the latter half process, the process step identification No. of "20" is allocated.

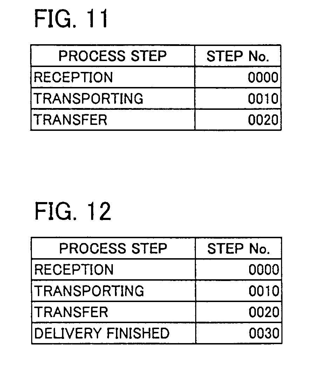

Figs. 11 and 12 each represent the "step No." for the transportation step from the former half to the latter half production process, and the transportation step from the latter half production process to the user. When "distribution step No." is "200020", it means that the process is proceeded to transfer from the former half to the latter half production process.

"Pick-up site" represents the site at which the product is picked-up.

"Current distribution site" represents to which place the product has been transported at present.

"Site of delivery" represents the site where the product is to be delivered.

"Distribution means" represents the transportation means used for distribution of the product.

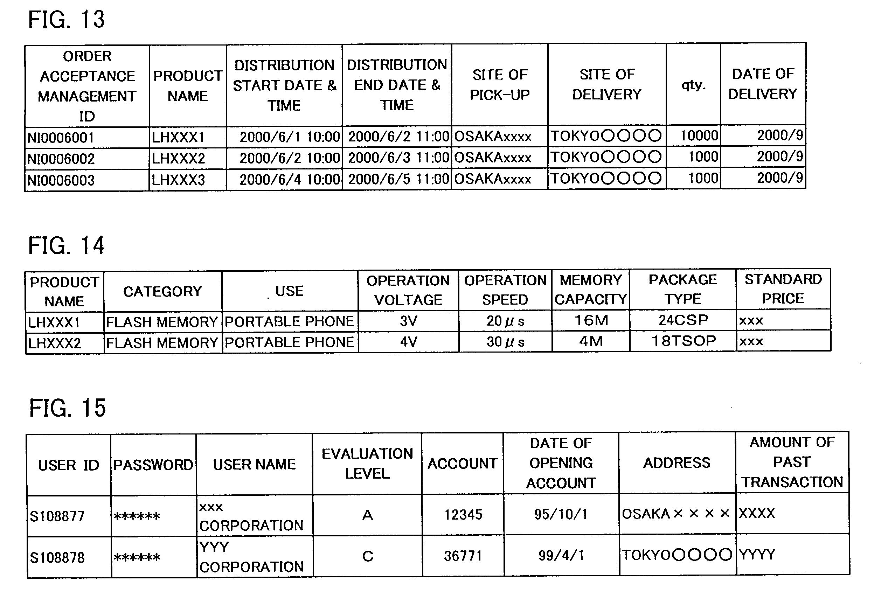

Referring to Fig. 13, the distribution instruction information stored in distribution instruction information storing unit 142 includes "order management ID", "product name", "distribution start date and time", "distribution end date and time", "pick-up site", "site of delivery", "quantity" and "date of delivery". "Order management ID" and "date of delivery" are the same as those described with reference to Fig. 3. Therefore, detailed description thereof will not be repeated here.

"Product name" represents the name of the product for which distribution operation is scheduled. "Distribution start date and time" represents the scheduled date and time for starting the distribution operation. "Distribution end date and time" represents the scheduled date and time at which the distribution operation ends. "Pick-up site" represents the place where the product is picked-up at the distribution start date and time. "Site of delivery" represents the place where the product is delivered at the distribution end date and time. "Quantity" represents the quantity of the product expected for the distribution operation.

### Brochure DB150

Referring to Fig. 14, brochure DB150 is an information management database of the products which can be ordered, and stores a list of products that can be ordered and information for each product. More specifically, brochure DB150 stores "product name", "category", "use", "operation voltage", "speed of operation", "memory capacity", "package type" and "standard price".

"Product name" represents the name of the product that can be ordered. "Category" represents to which category a product belongs. "Use" is a representative use of the product. "Operation voltage" represents at which voltage the product operates. "Speed of operation" represents the speed of operation of the product. "Memory capacity" represents memory capacity of the product. "Package type" represents the package type of the product. "Standard price" represents standard price of the product. The items specifying the product on brochure DB150 are not limited to these just described.

### Security management DB160

Referring to Fig. 15, security management DB160 stores security information of the user. More specifically, security management DB160 stores "user ID", "password", "user name", "evaluation level", "account", "date of opening account", "address" and "amount of past transaction". "User ID" is the same as that described with reference to Fig. 3, and therefore detailed description thereof will not be repeated here.

"Password" represents the password issued for every user ID. The password is stored encrypted in the security management DB160. "User name" represents the name of a company or an individual, as a user.

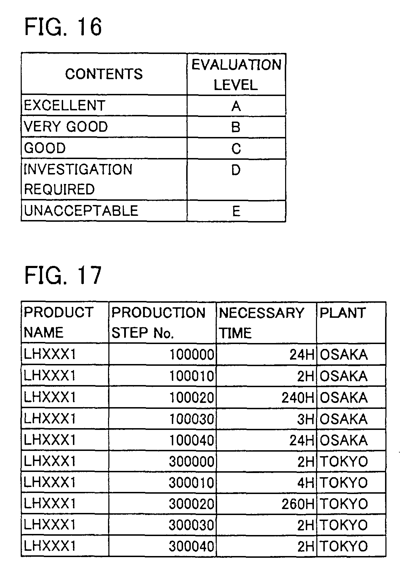

"Evaluation level" represents the result of the investigation (inquiry into the financial status) of the user performed by the sales side. Referring to Fig. 16, the evaluation is in five levels, that is, "A: excellent", "B: very good", "C: good", "D: further investigation required" and "E: unacceptable".

"Account" represents a bank account used by the user for transaction. "Date of opening account" represents the date on which the account was opened. "Address" represents the address of the company or an individual as the user. "Amount of past transaction" represents the actual amount of transaction up to the present time point.

### Standard Process Step DB170

Again referring to Fig. 2, standard process step DB170 includes a production standard process step information storing unit 171 and a distribution standard process step information storing unit 172, storing production standard process step information and distribution standard process step information, respectively. The production standard process step information represents necessary time for the operation of each process step. The distribution standard process step information represents the time necessary for the operation of each process step.

Referring to Fig. 17, production standard process step information storing unit 17 stores the production standard process step information including "product name", "production step No.", "necessary time" and "plant". "Production step No." is the same as that described with reference to Fig. 5, and therefore detailed description thereof will not be repeated here.

"Product name" represents the name of a product for which order is acceptable. "Necessary time" represents operation time necessary for the process step represented by the production step No. "Plant" represents the name of the plant where the product is manufactured.

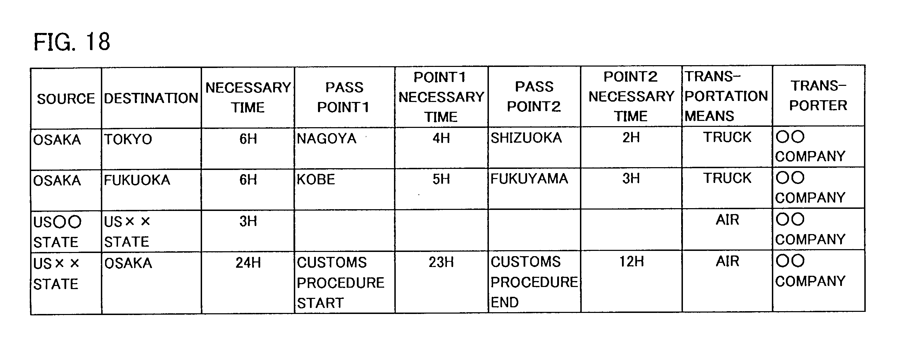

Referring to Fig. 18, distribution standard process step information storing unit 172 stores the distribution standard process step information including transportation including "transportation source", "transportation destination", "necessary time", "pass point 1", "necessary time of point 1", "pass point 2", "necessary time of point 2", "transportation means" and "transporter".

"Transportation source" represents the site where the transportation operation starts. "Transportation destination" represents the site where the transportation operation ends. "Necessary time" represents the time necessary for the transportation operation from the source to the destination.

"Pass point 1" represents one of the pass points passed through the transporting operation from the source to the destination. "Necessary time of point 1" represents the time necessary for the transporting operation from pass point 1 to the destination. "Pass point 2" represents one of the pass points passed through the transporting operation from the source to the destination. "Necessary time of point 2" represents the time necessary for the transporting operation from pass point 2 to the destination.

"Transportation Means" represents means used for transporting the product. It may include, for example, a truck and airplane. "Transporter" represents the name of the company that performs the transporting operation.

### Schedule Control Unit 110

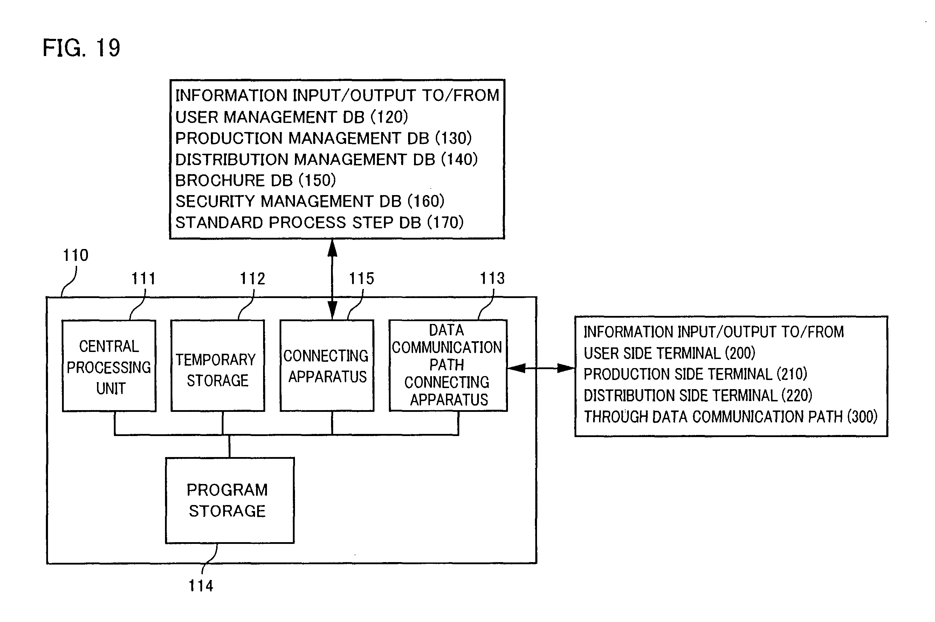

Referring to Fig. 19, schedule control unit 110 includes a central processing unit 111, a temporary storage 112, a data communication path connecting apparatus 113, a program storing unit 114, a connecting apparatus 115 for inputting/outputting data to and from each of the databases.

Central processing unit 111 performs a process in accordance with a program stored in the program storing unit, and performs control of schedule control unit 110, data control, data selection, data transfer and temporary storage of information.

Temporary storage 112 temporarily holds the contents resulting from the process by central processing unit 111, and data input from data communication path connecting apparatus 113 for connecting apparatus 115 inputting/outputting data from respective databases to schedule control unit 110, for example.

Data communication path connecting apparatus 113 connects the server system 100 and the data communication path 300, and performs bi-directional communication with terminal apparatuses 200, 210 and 220 through data communication path 300.

The program stored in program storing unit 114 is a program for realizing the logistics management system, for controlling overall server system 100. Therefore, it includes the following plurality of programs.

The program includes a program for calculating the progress state information, based on the order-acceptance information stored in order-acceptance information storing unit 112 of user management DB120, the production state information stored in production state information storing unit 131 of production management DB130, and the distribution state information stored in distribution state information storing unit 141 of distribution management DB140.

More specifically, the program extracts, based on the order-acceptance information stored in order-acceptance information storing unit 121 of user management DB120, corresponding production state information stored in production state information storing unit 131 of production management DB130 and the corresponding distribution state information stored in distribution state information storing unit 141 of distribution management DB140, and based on the extracted production state information and the distribution state information as well as the order-acceptance information stored in order-acceptance information storing unit 121 of user management DB120, calculates and outputs the progress state to be stored in production and distribution progress state/expectation information storing unit 122.

The program further includes a program controlling the expectation information, the production instruction information and the distribution instruction information, based on the order-acceptance information stored in order-acceptance information storing unit 121 of user management DB120, the production state information stored in production state information storing unit 131 of production management DB130, the distribution state information stored in distribution state information storing unit 141 of distribution management DB140, the production standard process step information stored in production standard process step information storing unit 171 of standard process step DB170, and the distribution standard process step information stored in distribution standard process step information storing unit 172 of standard process step DB 170.

More specifically, the program extracts, based on the order-acceptance information stored in order-acceptance information storing unit 121 of user management DB120, the corresponding production state information stored in production state information storing unit 131 of production management DB130 and the corresponding distribution state information stored in distribution state information storing unit 141 of distribution management DB, and based on the extracted production state information and the distribution state information, the production standard process step information and the distribution standard process step information respectively stored in production standard process step information storing unit 171 and distribution standard process step information storing unit 172 of standard process step DB170, as well as the order-acceptance information stored in order-acceptance information storing unit of user management DB120, calculates and outputs the expectation information to be stored in production and distribution progress state/expectation information storing unit 122, the production instruction information to be stored in production instruction information storing unit 132 of production management DB130 and the distribution instruction information to be stored in distribution instruction information storing unit 142 of distribution management DB140.

The program further includes a program checking the user ID and the password to determine whether the user is an authorized user, a program storing information in various DBs, a program forming an order-acceptance ID for every order to manage a user management device, production management data and distribution management database on the order-acceptance management ID, a program adding a secondary number to the order-acceptance management ID for an inquiry or a final order, a program changing the quantity of preliminary order to a value obtained by subtracting the quantity of final order from the quantity of the preliminary order, a program comparing the calculated expected date of delivery and the desired date of delivery of the user and determining the date of delivery to be given as an answer to the user based on the result of comparison, a program calculating and determining priority of the calculated expected date of delivery of production distribution as well as instructed date of delivery of production distribution, to form the production instruction distribution instruction information, and a program extracting product information from brochure DB150.

The program further includes a program inspecting whether transferred information exists in brochure DB150 and inspecting whether credit is assured in comparison with the evaluation level of security DB160, a program to store operation complete step No. and operation completion quantity, a program calculating whether there is a delay of operation at every production process step check point, a program performing control within schedule control unit 110, data control, data selection, data transfer and temporary storage of information, and a program performing recalculation of the progress state information in a prescribed unit time period (for example, by the unit of a day), based on the order-acceptance information stored in order-acceptance information storing unit 121 of user management DB120, the production state information stored in production state information storing unit 131 of production management DB130 and the distribution state information stored in distribution state information storing unit 141 of distribution management DB140.

The program further includes a program performing recalculation of the expectation information, the production instruction information and the distribution instruction information by a prescribed unit time period (for example, by the unit of a day), based on the order-acceptance information stored in order-acceptance information storing unit 121 of user management DB120, the production state information stored in production state information storing unit 131 of production management DB130, the distribution state information stored in distribution state information storing unit 141 of distribution management DB140, the production standard process step information stored in production standard process step information storing unit 171 of standard process step DB170 and the distribution standard process step information stored in distribution standard process step information storing unit 172 of standard process step DB170.

The program may be stored in advance in the program storing unit, or it may be stored in a removable storage medium 111 such as a CD-ROM (Compact Disk-Read Only Memory).

When it is stored in a removable storage medium, the stored program is read from the storage medium by a CD-ROM drive or the like, not shown, and temporarily stored in the program storing unit.

The storage medium storing the program may be a tape such as a magnetic tape or a cassette tape, a disk such as a magnetic disk (flexible disk, hard disk and the like), or an optical disk (CD-ROM/MO/MD/DVD), a card such as an IC card (including a memory card) or an optical card, or a semiconductor memory such as mask ROM (Read Only Memory), EPROM (Erasable Programmable ROM), EEPROM (Electrically Erasable and Programmable ROM), a flash memory or the like, that carries the program in a fixed manner.

Further, the medium may hold the program in flux, so that the program may be down-loaded from a network. When the program is down-loaded from the network, the program for down-loading may be stored in server system 100 in advance, or installed in the server system 100 in advance from a different recording medium.

### Terminal Apparatuses 200, 210 and 220

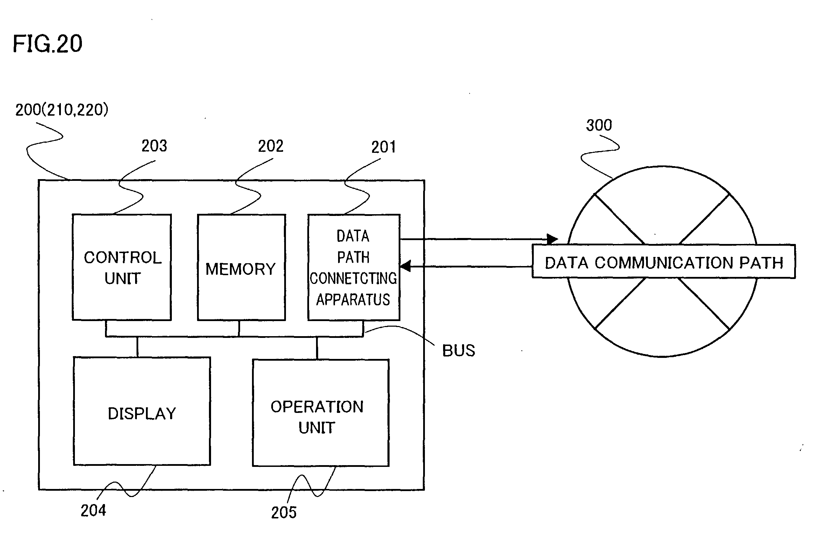

Referring to Fig. 20, terminal apparatus 200 includes: a data communication path connecting apparatus 201 connected to server system 100 through bi-directional data communication path 300 for bi-directional communication with server system 100; a memory apparatus 202 storing data transferred from server system 100; an operating unit 205 operated by the user for inputting various data; a display unit 204 displaying various data; a control unit 203 including a central processing unit and a main program for controlling data communication path connecting apparatus 201, memory apparatus 202, display unit 204 and operating unit 205 utilizing the main program; and a bus connecting data communication path connecting apparatus 201, memory apparatus 202, control unit 203, display unit 204 and operating unit 205 with each other.

Data communication path connecting apparatus 201 includes a data reception unit and a transmission unit, not shown.

Terminal apparatuses 201 and 220 have the same hardware configuration as terminal apparatus 200. Therefore, description thereof will not be repeated here.

The reception unit of user side terminal apparatus 200 receives the progress state information and the expectation information stored in production and distribution progress state/expectation information storing unit 122. The transmission unit of terminal apparatus 200 transmits order-acceptance information to order-acceptance information storing unit 121 through bi-directional data communication path 300 and schedule control unit 110.

The reception unit of production side terminal apparatus 210 receives the production instruction information stored in production instruction information storing unit 132. The transmission unit of terminal apparatus 210 transmits the result of production operation performed based on the received production instruction information, to production state information storing unit 131 through bi-directional data communication path 300 and schedule control unit 110.

The reception unit of distribution side terminal apparatus 220 receives the distribution instruction information stored in distribution instruction information storing unit 142. The transmission unit of terminal apparatus 220 transmits the result of distribution operation performed based on the received distribution instruction information to distribution state information storing unit 141 through bi-directional data communication path 300 and schedule control unit 110.

Memory apparatus 202 of distribution side terminal apparatus 220 stores the distribution instruction information transferred from server system 100 through bi-directional data communication path 300, for example. Control unit 203 of terminal apparatus 220 registers the actual recode of the completed distribution process steps executed based on the distribution instruction information stored in memory apparatus 202, for example. The actual record information input from operating unit 205 is transmitted to server system 100. Similarly, production side terminal apparatus 210 registers the actual record of the production process steps executed and completed based on the production instruction information, and the actual record information input through the operating unit is transmitted to the server system 100.

### First Operation Example of Logistics Management System

An example of operation using the logistics management system above will be described in the following.

Here, it is assumed that the user is in Japan, and there are bases in Japan and abroad for both production and distribution. Further, it is assumed that the user inputs order information, that is, order-acceptance information through user side terminal apparatus 200, and the terminal apparatus 200 transmits the input information to server system 100. Based on the order-acceptance information, production and distribution process steps are planned and executed.

Further, it is assumed that the user places an order of a necessary quantity of a flash memory as a component of a digital camera, using terminal apparatus 200.

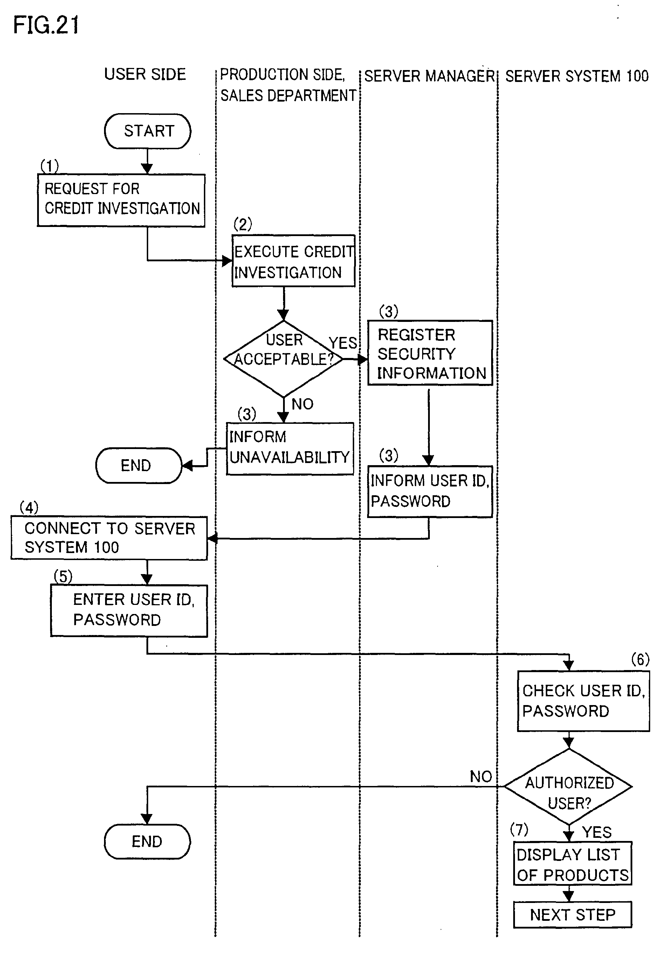

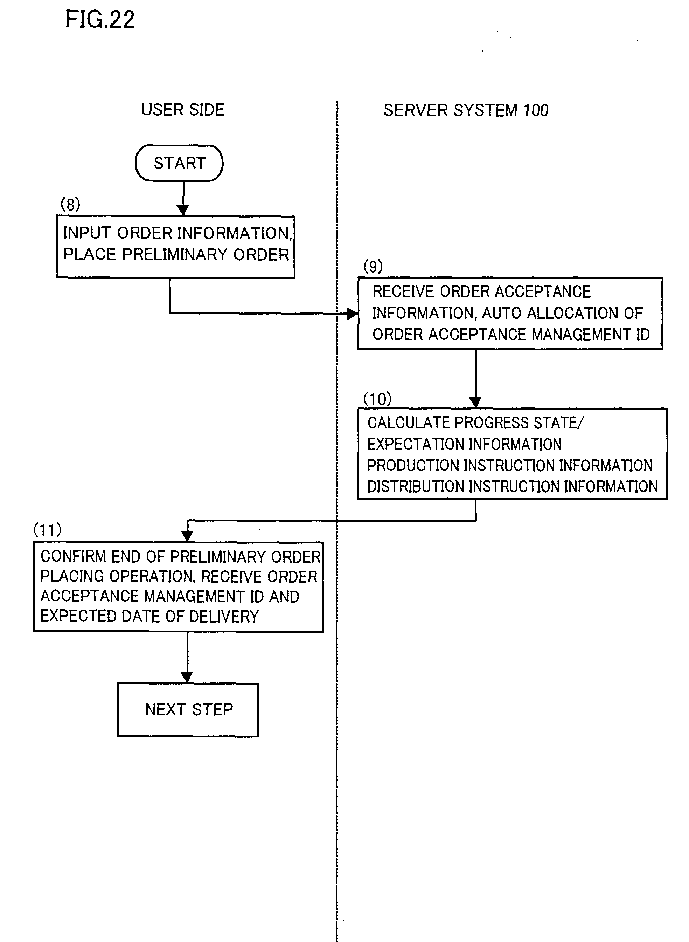

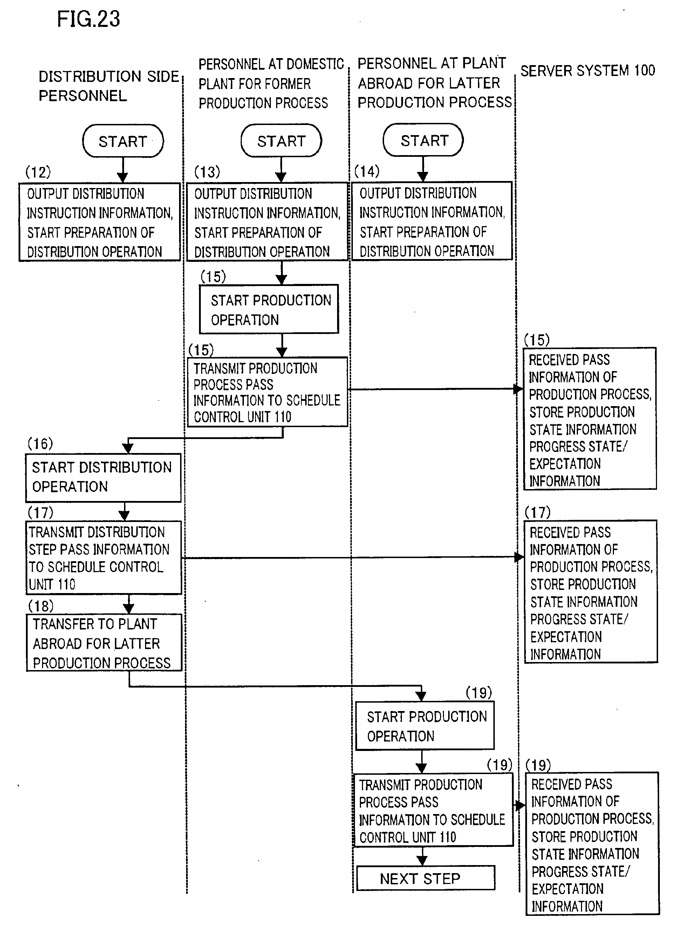

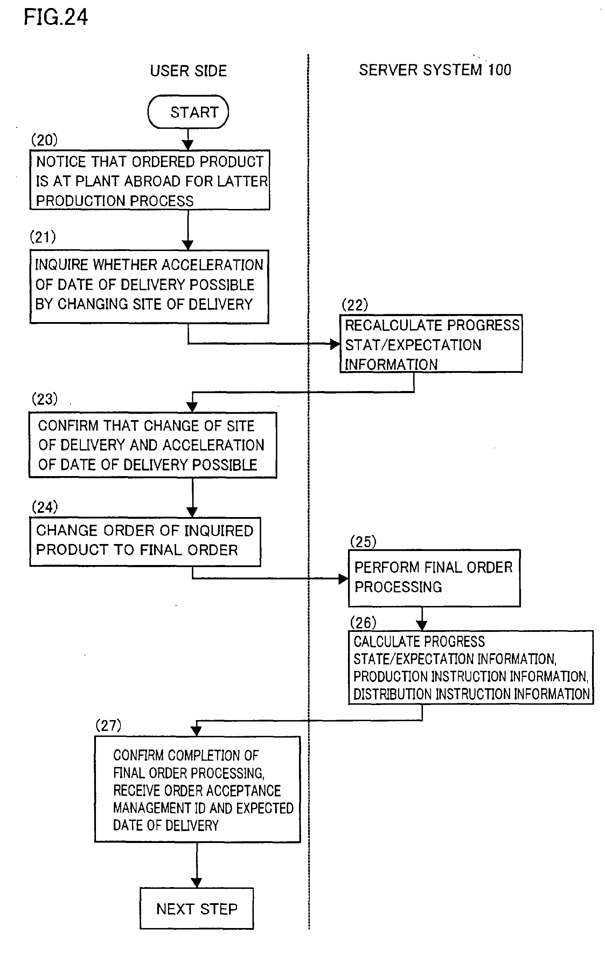

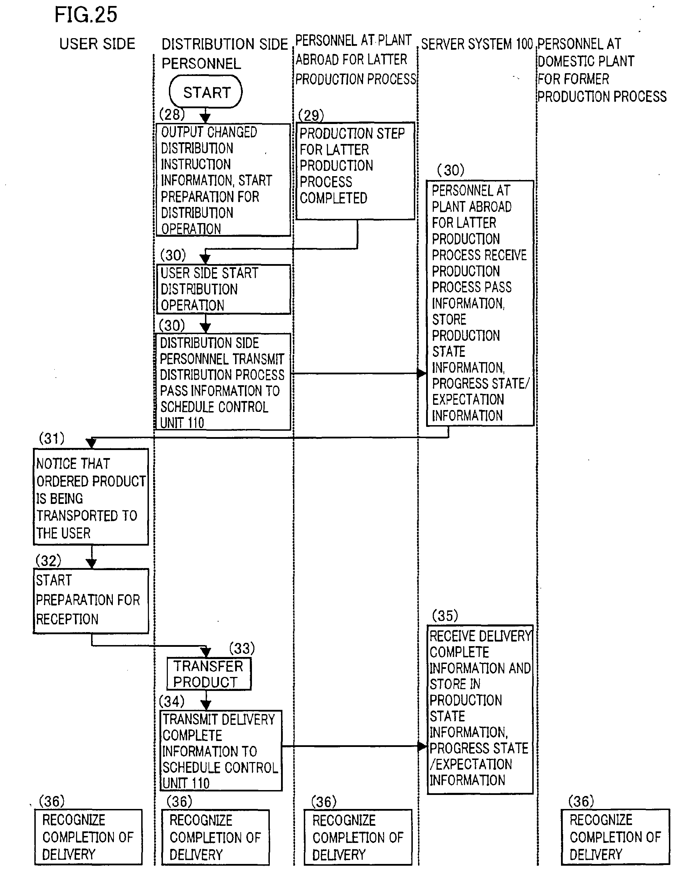

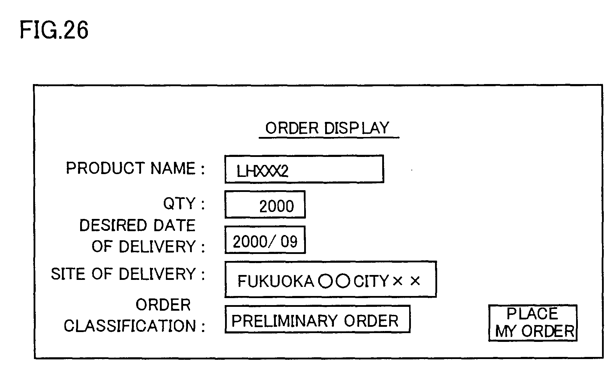

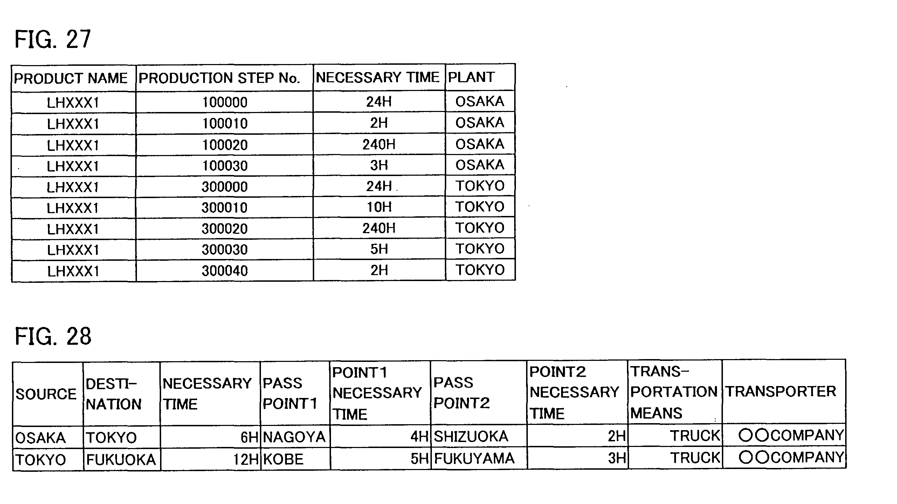

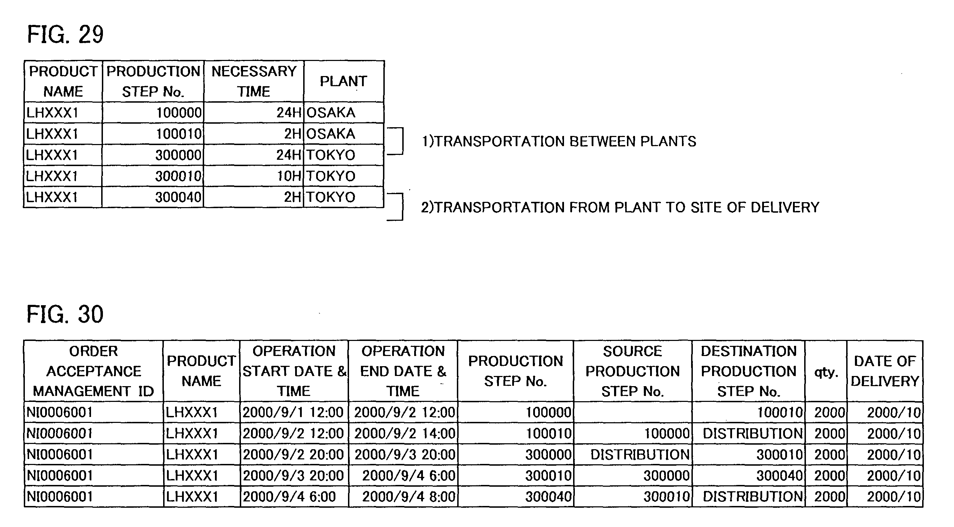

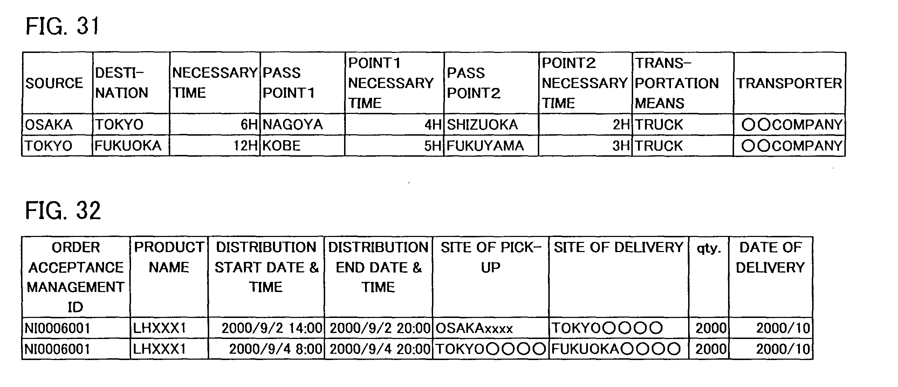

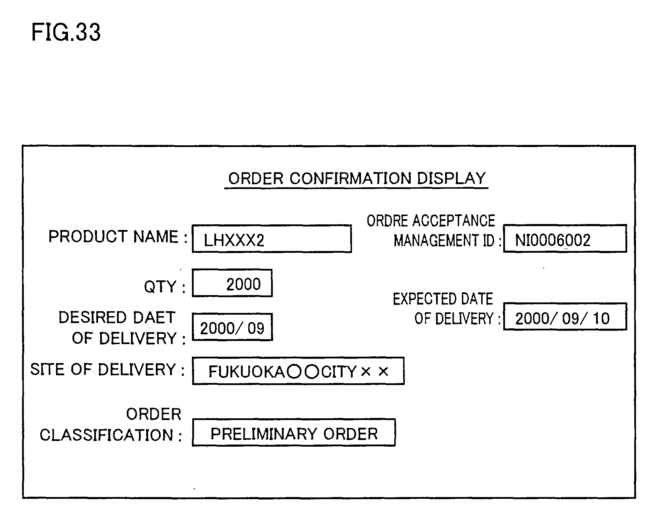

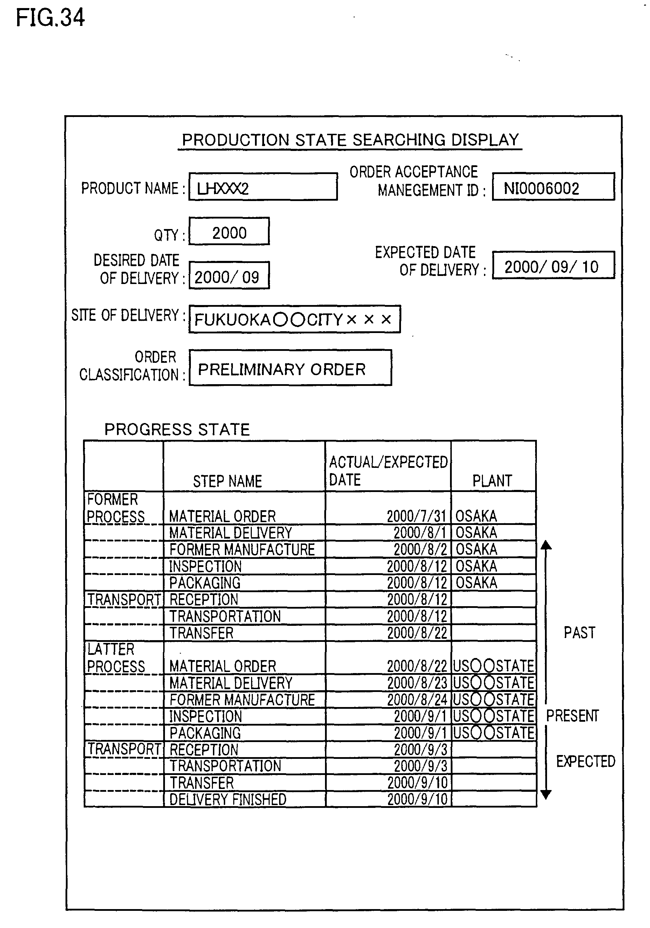

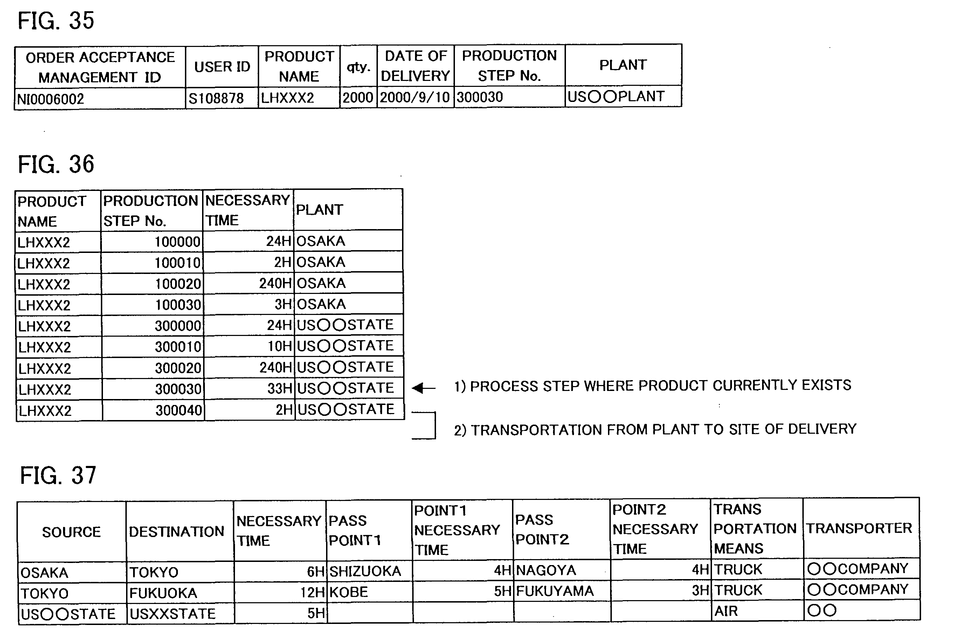

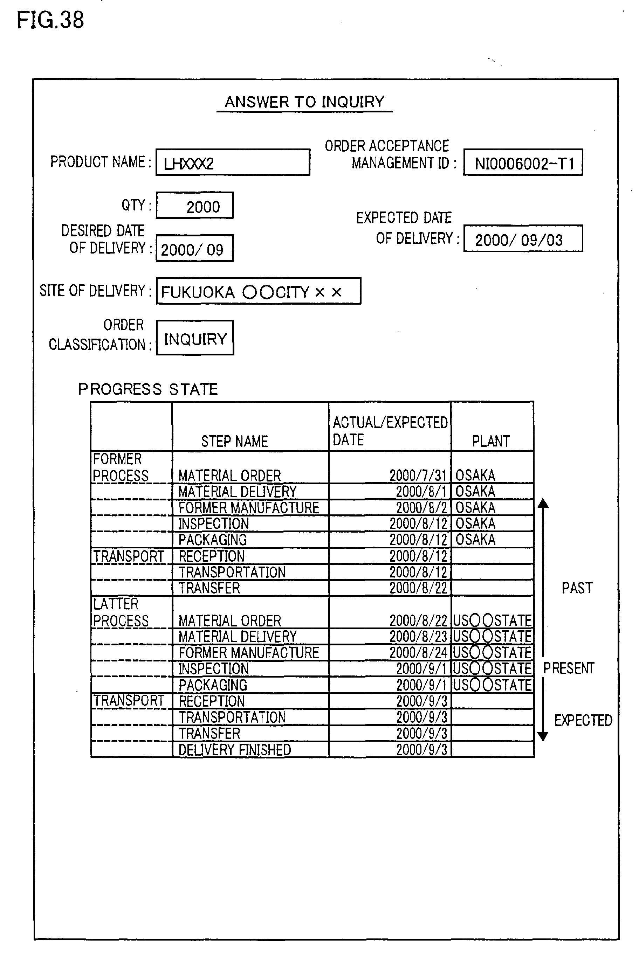

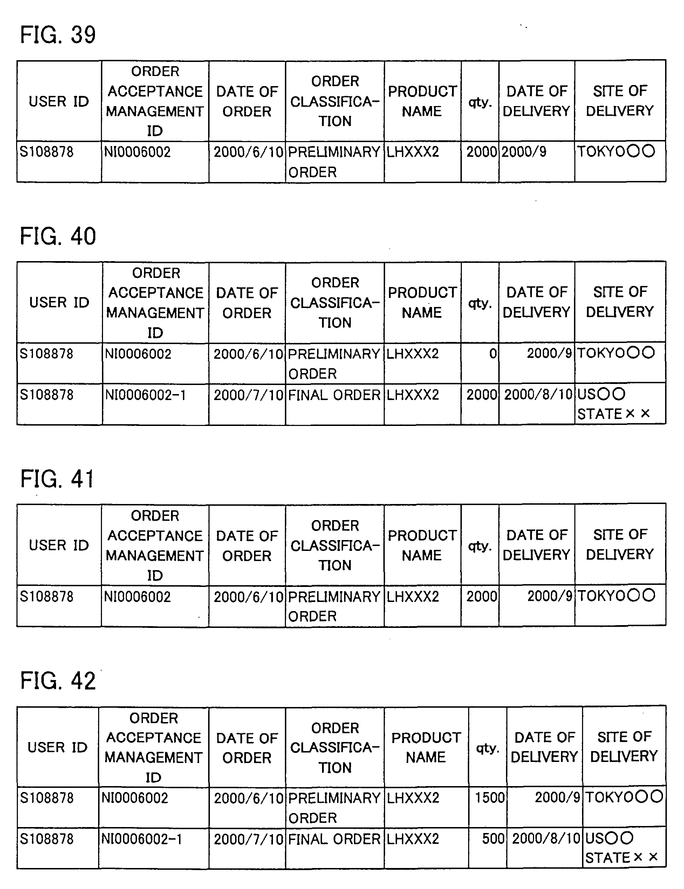

Figs. 21 to 25 are flow charts of the operation. An example of the operation of the logistics management system will be described with reference to the flow charts, and the numerals in parentheses correspond to the numerals in parentheses in the flow charts.
(1) When the user uses the present system for the first time, the user directly requests credit investigation by the sales department of production side, by telephone, direct meeting, e-mail or the like.
(2) The sales department performs credit investigation, making reference to user reliability, solvency and the like.
(3) A server manager managing server system 100 receives the results of credit investigation from the sales department. When the user is allowed to use the present system, the server manager registers a user ID, a password, user name, evaluation level and the address with security management DB160, and notifies the user of the user ID and the password. When it is determined by the sales department that use of the present system by the user is not permissible, the user is informed of the unavailability, and the user cannot proceed to the further steps. After this step, it is possible for the user to change the password as needed.
(4) The user to which the user ID and the password have been issued accesses server system 100, using user side terminal apparatus 200 that can be used for ordering a product.
(5) When connection to server system 100 is established, server system 100 requests input of user ID and the password, on a display unit 204 of terminal apparatus 200. In accordance with the dialog on the display, the user operates the operating unit 205, and enters the user ID and the password. The input data is transferred to server system 100. As to the manner of input, data may be input by a mobile terminal apparatus and transferred to server system 100.
(6) When the data is transferred, schedule control unit 110 compares the user ID and the password with those stored in security management DB160, so as to determine whether it is an authorized user. When it is found that the user is not an authorized user as a result of determination, the user cannot proceed to the further step from user side terminal apparatus 200.
(7) When it is found that the user is an authorized user as a result of determination, schedule control unit 110 has a list of products displayed on user side terminal apparatus 200, based on the product names stored in brochure DB150. It is also possible to have display a list of products meeting the demand of the user, when the user enters a desired specification (category, use, operation voltage, speed of operation, memory capacity, package type).
(8) The user selects the product to order from the list of products, and enters the desired quantity, date of delivery and the site of delivery, through such an ordering display as shown in Fig. 26. The entered data is transferred from terminal apparatus 200 to server system 100. Here, it is assumed that a flash memory is selected as the product. As it is not known at this time point when the product will be delivered, and hence, it is assumed that the order is placed as a preliminary order.
(9) Schedule control unit 110 receives the information of the user (user ID) and the order-acceptance information (date of order, order classification, product name, quantity, date of delivery, site of delivery), automatically allocates an order-acceptance management ID for every order-acceptance information, and stores the information of the user, the order-acceptance information and the order-acceptance management ID, in the order-acceptance information storing unit 121 of user management DB120. The order-acceptance management ID is a number allocated automatically by schedule control unit 110 every time the user places a preliminary order, which number consists of "company identification code + order year and month + serial number + secondary number."
(10) Schedule control unit 110 obtain, based on the order-acceptance information stored in order-acceptance information storing unit 121 of user management DB120, the production state information stored in production state information storing unit 131 of production management DB130, the distribution state information stored in distribution state information storing unit 141 of distribution management DB140, and the production standard process step information and the distribution standard process step information respectively stored in production standard process step information storing unit 171 and distribution standard process step information storing unit 172 of standard process step DB140, the expectation information to be stored in production and distribution progress state/expectation information storing unit 122 of user management DB120, the production instruction information to be stored in production instruction information storing unit 132 of production management DB130, and distribution instruction information to be stored in distribution instruction information storing unit 142 of distribution management DB140.
   Referring to Figs. 27 and 28, the method of calculating the expected date of delivery stored in production and distribution progress state/expectation information storing unit 122 of user management DB120 will be described, as an example. Assume that a user places an order on September 1, 2000, for the product name "LHXXX1", designating "FUKUOKA" as the site of delivery. First, referring to the production standard process step information shown in Fig. 27, it is calculated that the time necessary for the overall production process to produce the product "LHXXX1" is 550 hours. Thereafter, based on the distribution standard process time information shown in Fig. 28, it is calculated that transportation from Osaka plant to Tokyo plant takes 6 hours. Further, it is calculated that transportation from Tokyo plant to Fukuoka as the delivery destination takes 12 hours. Therefore, it is calculated that the time from placement of an order to delivery is 568 hours (= 550 + 6 + 12 hours). As 568 hours approximately corresponds to 24 days, the expected delivery is calculated to be September 25, 2000, by adding 24 days to the date of order.
   Referring to Figs. 29 to 32, an example of the method of calculating the production instruction information and the distribution instruction information will be described. It is assumed that the user places an order of a product, specifying the product name "LHXXX1", date of order "September 1, 2000, 12:00", quantity "200", site of delivery "Fukuoka" and desired date of delivery "October, 2000." In accordance with the production standard process step information shown in Fig. 29, the instruction information for the first step No. "100000" for producing the product "LHXXX1" is formed, from the production instruction information shown in Fig. 30. It is known that 24 hours is necessary for the step No. "100000". Therefore, the operation start date and time is set to "September 1, 2000, 12:00", which is the date of order, and the operation end date and time is calculated to be "September 2, 2000, 12:00", that is, after 24 hours. The operation start date and time and the operation end date and time for the step No. "100010" can be calculated in the similar manner.
   The step following the step No. "100010" is "300000", which step is performed in a different production plant, and hence transportation between the plants becomes necessary. From Fig. 31, it can be understood that transportation from Osaka plant to Tokyo plant takes 6 hours. Therefore, the distribution instruction information is formed as shown in Fig. 32, in which the operation end date and time "September 2, 2000, 14:00" of the step No. "100010" of the production instruction information is set as the distribution start date and time and "September 2, 2000, 20:00", that is, 6 hours after the start time, is set as the distribution end date and time. In the similar manner, the production instruction information and the distribution instruction information are formed.
   Further, schedule control unit 110 finds and stores, based on the order-acceptance information stored in order-acceptance information storing unit 121 of user management DB120, the production state information stored in production state information storing unit 131 of production management DB130 and the distribution state information stored in distribution state information storing unit 141 of distribution management DB140, the progress state information to be stored in production and distribution progress state/expectation information storing unit 122 of user management DB120.
(11) As an example, such an order confirmation display as shown in Fig. 33 appears on user side terminal apparatus 200, and the user confirms completion of an order. At this time, the order-acceptance management ID and the expected date of delivery corresponding to the contents of the order placed by the user are received, and displayed on the order confirmation display.
(12) Distribution side personnel connects distribution side terminal apparatus 220 to server system 100, receives the distribution instruction information of the ordered product stored in distribution instruction information storing unit 142, and obtains a display of the information on display unit 204 of terminal apparatus 220. Distribution side personnel starts preparation of the distribution operation including selection of transportation means, procurement of necessary number of transportation means and personnel, preparation of packaging and export/import procedure based on the distribution instruction information.
(13) Personnel of the domestic plant for former half production step connects production side terminal apparatus 210 to server system 100, receives the production instruction information of the ordered product stored in production instruction information storing unit 132, and obtains display of the information on display unit 204 of terminal apparatus 210. The personnel starts preparation of the production operation including arrangement of materials, selection of production facility, personnel procurement and the like, based on the production instruction information.
(14) Personnel of a plant abroad for the latter half production process connects the production side terminal apparatus 210 to server system 100, receives the production instruction information of the ordered product stored in production instruction information storing unit 132 and obtains display of the information on display unit 204 of terminal apparatus 210, in the similar manner. The personnel starts preparation of the production operation including arrangement of materials, selection of production facility and personnel procurement, based on the production instruction information.
(15) As the preparation for the production operation has been already completed in (13), the personnel of the domestic plant for the former half production step starts highly efficient production operation as soon as the materials are delivered. In the production process steps performed in the domestic plant of the former half production process, the production side terminal apparatus 210 automatically transmits the production step No. and the quantity to schedule control unit 110 every time a pre-set check point for the production process is passed. Schedule control unit 110 controls production state information storing unit 131 and production and distribution progress state/expectation information storing unit 122 so that production step No. and the quantity are stored therein.
(16) At the end of the former half production process, the production plant is switched to the plant abroad. Thus, the distribution personnel starts pick-up operation for transportation of the semi-finished product overseas. If the latter half production process is performed by a domestic plant, transportation within the country takes place.
(17) As the preparation for the distributing operation has been completed in (12), the distribution personnel starts the operation of transporting the semi-finished product from the domestic plant for former half production processing to the plant abroad for latter half production processing, using appropriate transportation means, immediately. In the distribution step, every time a pre-set distribution step check point is finished (passed), distribution side terminal apparatus 220 automatically transmits the distribution step No. and the current site of distribution to schedule control unit 110. Schedule control unit 110 controls distribution state information storing unit 141 and production and distribution progress state/expectation information storing unit 122 so that distribution step No. and the current site of distribution are stored therein.
(18) The distribution personnel performs the transfer operation of the semi-finished product to the plant abroad for the latter half production process.
(19) As the preparation for the production operation has been already completed in (14), the personnel of the plant abroad for the latter half production process starts highly efficient production operation as soon as the materials are delivered. In the production process of the plant abroad for the latter half production process, every time a pre-set production step check point is finished, production side terminal apparatus 210 automatically transmits the production step No. and the quantity to schedule control unit 110. Schedule control unit controls production state information storing unit 131 and production and distribution progress state/expectation information storing unit 122 so that the production step No. and the quantity are stored therein.
(20) Using the user side terminal apparatus 200, the user receives the progress state information and the expectation information stored in the production and distribution progress state/expectation information storing unit 122 based on the order-acceptance management ID from server system 100, and the information is displayed on display unit 204. Fig. 34 shows an example of the display. Here, it is possible for the user to know that the ordered product is now being processed at the plant abroad for the latter half production process.
(21) Here, the user, noticing that a manufacturing plant of the user exist in the same country as the plant abroad for the latter half production process of the production side, makes an inquiry to server system 100, as to whether acceleration of the delivery schedule is possible by switching the delivery destination to the manufacturing plant abroad of the user, and confirms. As a method of confirmation, the user changes "site of delivery" from Japan to abroad and changes "order classification" to "inquiry", using the user side terminal apparatus 200.
(22) Schedule control unit 110 recalculates and stores the expectation information stored in production and distribution progress state/expectation information storing unit 122 of user management DB120, based on the order-acceptance information stored in order-acceptance information storing unit 121 of user management DB120, the production state information stored in production state information storing unit 131 of production management DB130, the production state information stored in production state information storing unit 141 of production management DB140, and production standard process step information and the distribution standard process step information respectively stored in production standard process step information storing unit 171 and distribution standard process step information storing unit 172 of standard process DB170.
   Referring to Figs. 35 to 37, an example of the method of calculating the expectation information will be described. Assume that an inquiry of expected date of delivery is made on "September 1, 2000", in which the site of delivery for the order-acceptance management ID "NI0006002" is changed from "Fukuoka" to "state of XX, United States". Referring to Fig. 35, it can be understood from the production state information that the present production step No. of the product name "LHXXX2" is "300030", and the plant is "○○plant, United States". From the production standard process step information shown in Fig. 36, it is calculated that 35 hours are necessary from the present production step of the product to the completion of production. From the distribution standard process step information shown in Fig. 37, it is understood that 5 hours is necessary for the distribution operation from "the state of ○○, United States" where the plant for the latter half production process exist, to "state of XX, United States". Therefore, it is understood that 40 hours (= 35 + 5 hours), that is, roughly two days are necessary for the delivery of the product from the present process step to the site of delivery. Thus, by adding two days to the date of inquiry "September 1, 2000", the expected date of delivery is calculated to be "September 3, 2000".
   Schedule control unit 110 calculates and stores the progress state information to be stored in production and distribution progress state/expectation information storing unit 122 of user management DB120, based on the order-acceptance information stored in order-acceptance information storing unit 121 of user management DB120, the production state information stored in production state information storing unit 131 of production management DB130 and the distribution state information stored in distribution state information storing unit 141 of distribution management DB140. For an inquiry, the production instruction information stored in production instruction information storing unit 132 of production management DB130 and the distribution instruction information stored in distribution instruction information storing unit 142 of distribution management DB140 are not rewritten, because an inquiry is a simple operation of confirmation, and no actual instruction for operation is not given to the distribution side and the production side.
(23) The user accesses to the server system 100 using user side terminal apparatus 200, the user ID and the password are checked by server system 100, and thereafter, the user enters the order-acceptance management ID. Then, the progress state information and the expectation information stored in production and distribution progress state/expectation information storing unit 122 are transmitted to terminal apparatus 200 and displayed on display unit 204. Fig. 38 shows an example of the display. The user, viewing the result of inquiry displayed on display unit 204, confirms that change of the delivery destination and acceleration of delivery schedule are possible.
(24) As it is confirmed that change of delivery destination and acceleration of date of delivery are possible, the user changes the order classification of the product, for which the inquiry had been made, to final order, using user side terminal apparatus 200.
(25) Schedule control unit 110 receives the change to the final order from user side terminal apparatus 200, and executes the process for the final order. Referring to Figs. 39 and 40, an example will be described, in which the preliminary order quantity of 2000 are all changed to the final order processing. Here, the quantity of preliminary order, which is changed to the final order processing, is automatically changed to 0 by schedule control unit 110 and stored in order-acceptance information storing unit 121. The order-acceptance management ID of the product for which final order is placed is stored in such a form that has a secondary number automatically allocated to the order-acceptance management ID of the preliminary order, that has been changed to the final order. Referring to Figs. 41 and 42, when 500 units are changed for the final order processing, the quantity of preliminary order is automatically set to 1500, by schedule control unit 110.
(26) Schedule control unit 110 recalculates and stores the expectation information stored in production and distribution progress state/expectation information storing unit 122 of user management DB120, the production instruction information stored in production instruction information storing unit 132 of production management DB130, and distribution instruction information stored in distribution instruction information storing unit 142 of distribution management DB140, based on the order-acceptance information stored in order-acceptance information storing unit 121 of user management DB120, the production state information stored in production state information storing unit 131 of production management DB130, the distribution state information stored in distribution state information storing unit 141 of distribution management DB140, and the production standard process step information and the distribution standard process step information respectively stored in production standard process step information storing unit 171 and distribution standard process step information storing unit 172 of standard process step DB170. Details are the same as those described in (10) above. Therefore, description thereof will not be repeated here.
   Schedule control unit 110 finds and stores the progress state information stored in production and distribution progress state/expectation information storing unit 122 of user management DB120, based on the order-acceptance information stored in order-acceptance information storing unit 121 of user management DB120, the production state information stored in the production state information storing unit 131 of production management DB130 and the distribution state information stored in the distribution state information storing unit 141 of distribution management DB140.
(27) The user confirms completion of the final order by the user side terminal apparatus 200. At this time, user side terminal apparatus 200 also receives the order-acceptance management ID and the expected date of delivery corresponding to the contents of the order placed by the user.
(28) Distribution side personnel connects the distribution side terminal apparatus 220 to server system 100, receives the distribution instruction information of the product of which site of deliver is changed, stored in distribution instruction information storing unit 142, which received information is displayed on display unit 204 of distribution side terminal apparatus 220. Thereafter, the personnel starts the change of the preparation operation performed in (12).
(29) The latter half production process is finished based on the production instruction information.
(30) As the preparation for the distribution operation has been already completed in (28), the distribution side personnel starts the operation of transporting the finished product from the plant abroad for the latter half production process to the site of delivery using appropriate transportation means, immediately in accordance with the procedure. In the distribution process, every time a pre-set check point for the distribution process is finished, distribution side terminal apparatus 220 automatically transmits the distribution step No. and the present site of distribution to schedule control unit 110. Schedule control unit 110 have the distribution step No. and the present site of distribution stored in the distribution state information storing unit 141 and progress state/expectation information storing unit 122.
(31) Using the user side terminal apparatus 200, the user confirms the progress state information and the expectation information stored in the production and distribution progress state/expectation information storing unit 122 based on the order-acceptance management ID, and finds that the ordered product is now being transported to the manufacturing plant abroad of the user side.
(32) The user prepares for reception at the manufacturing plant abroad of the user.
(33) The distribution side personnel transports the ordered product to the manufacturing plant abroad of the user, as the site of delivery, and transfers the product to the user while confirming the order-acceptance management ID, the quantity and the product name.
(34) Using the distribution side terminal apparatus 220, the distribution side personnel establishes a connection to server system 100, and transmits information notifying that delivery to the user is completed, to server system 100.
(35) Schedule control unit 110 have the distribution completion information received from distribution side terminal apparatus 220 stored in production and distribution progress state/expectation information storing unit 122 of user management DB120 and the distribution state information storing unit 141 of distribution management DB140.
(36) The production side personnel, the distribution side personnel and the user establish connection to server system 100 by respective terminal apparatuses 210, 220 and 200, confirm the progress state information and the expectation information stored in production and distribution progress state/expectation information storing unit 122, and recognize that delivery is completed.

By the above described series of operations, the product is delivered to the user. It is assumed that the production side personnel and the distribution side personnel must go through the previous credit investigation and previous registration for security, and security must be checked by a password, similar to those requested for the user, when establishing a connection to server system 100.

Various databases DB120 to 170 of server system 100 may be provided outside the server system. Namely, it may be provided on the user side, the distribution side or the production side.

As described above, according to the present embodiment, the schedule control unit controls the expectation information, the distribution instruction information and the production instruction information, based on the order-acceptance information, the distribution state information, the production state information, the production standard process step information and the distribution standard process step information. Therefore, the progress from placement of an order by the user for a product, through production and distribution to completion of delivery can be controlled in a centralized manner. Thus, it becomes possible to make optimal production plan and distribution plan, and to efficiently make use of the production facility, labor and transportation means.

The schedule control unit also controls the progress state information based on the order-acceptance information, the distribution state information and the production state information. Therefore, it is possible for the user, for the production side personnel and the distribution side personnel to directly confirm the progress state information of production or distribution, by accessing to the progress state information, the production state information and the distribution state information.

### Second Example of Operation of the Logistics Management System

Another example of operation using the logistics management system will be described in the following.

Here, it is assumed that the user is in Japan, and there are bases in Japan and abroad for both production and distribution. Further, it is assumed that the user inputs order information, that is, order-acceptance information through user side terminal apparatus 200, and the terminal apparatus 200 transmits the input information to server system 100. Based on the order-acceptance information, production and distribution process steps are planned and executed.

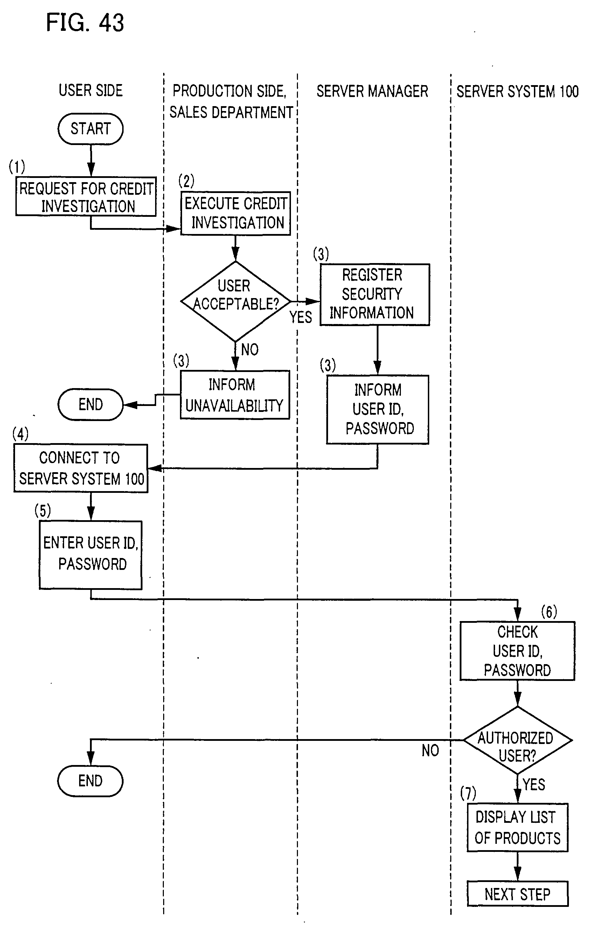

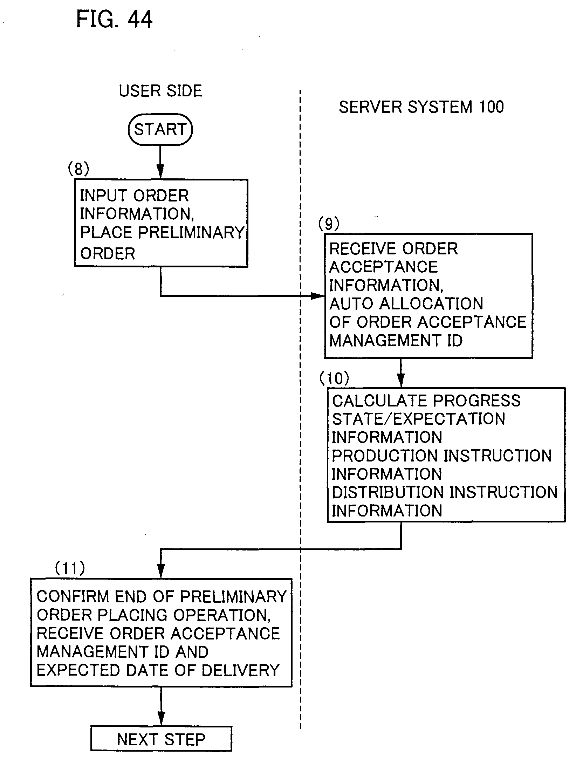

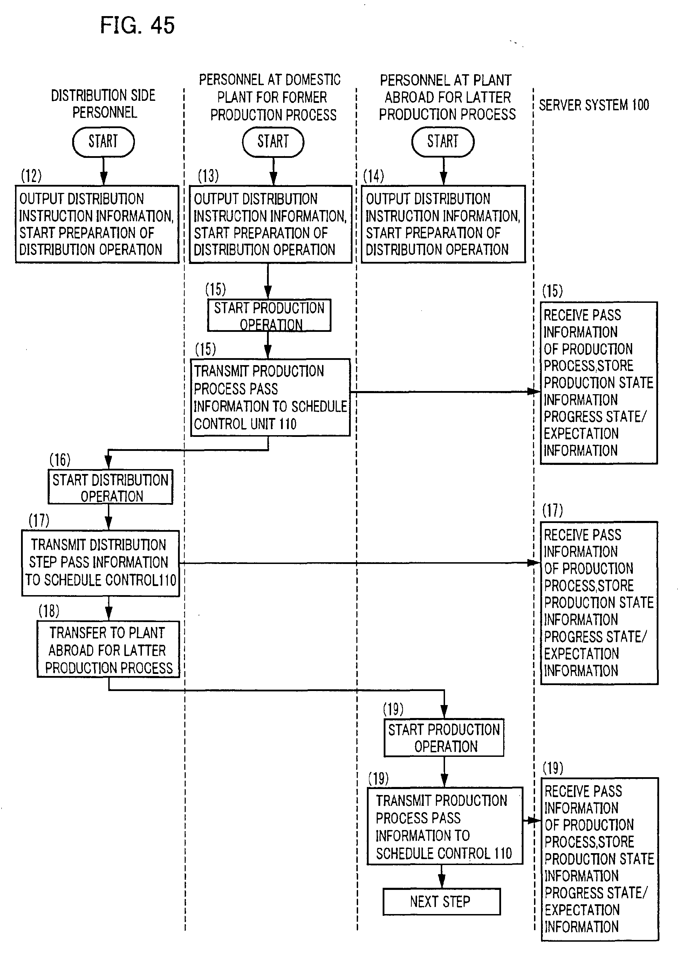

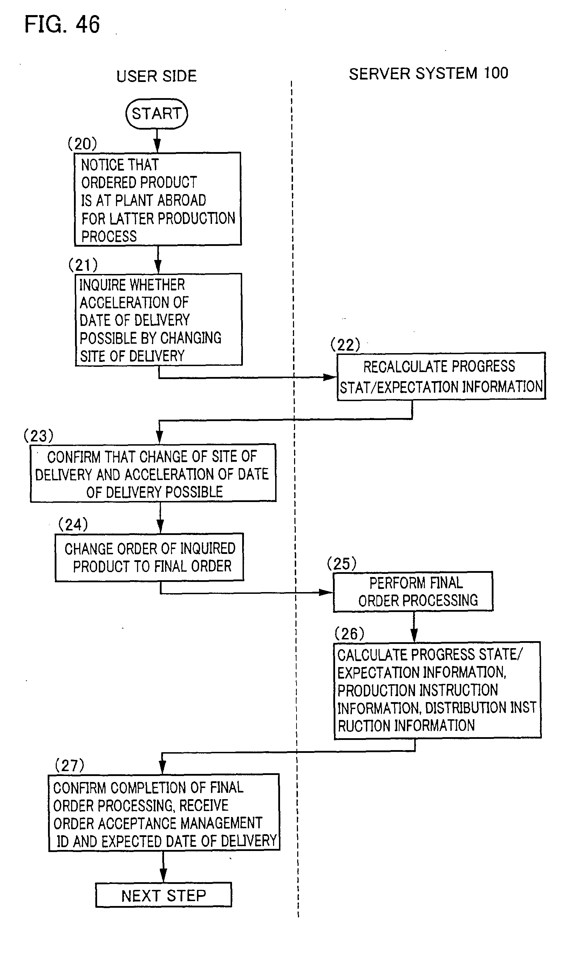

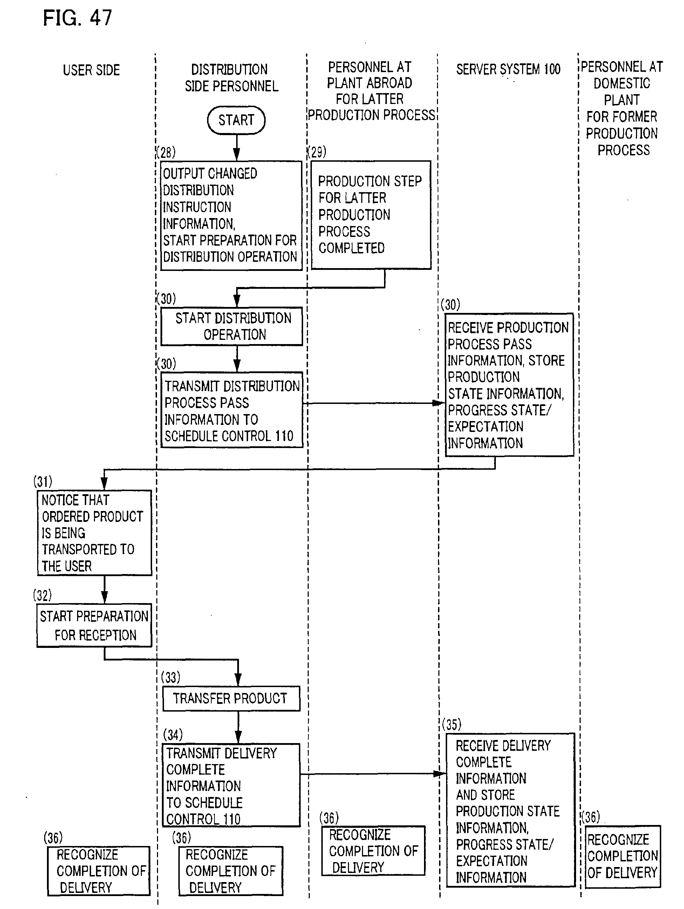

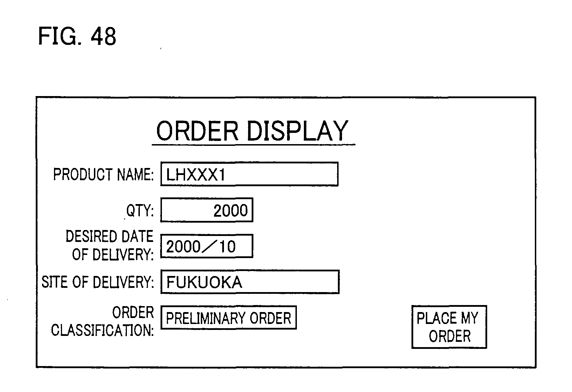

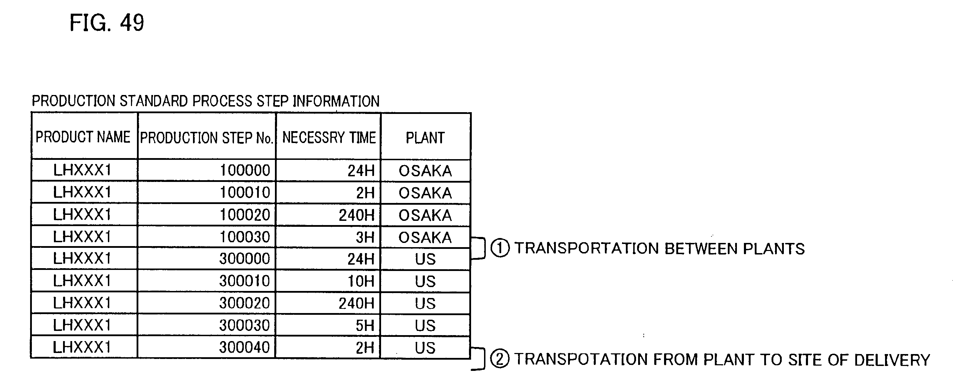

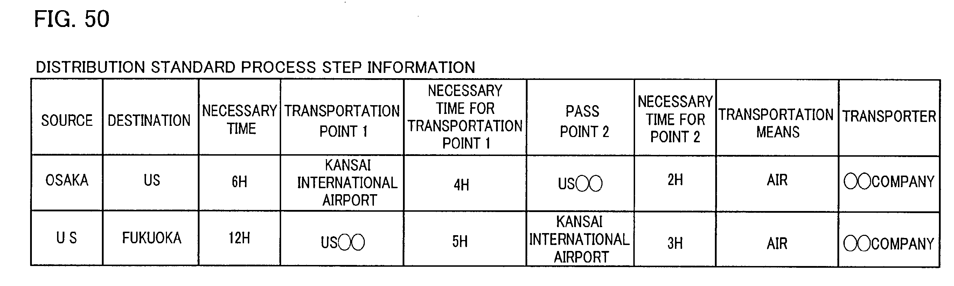

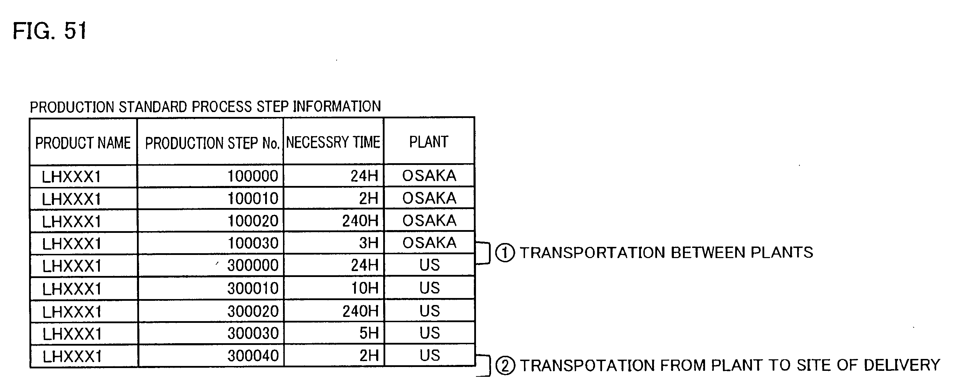

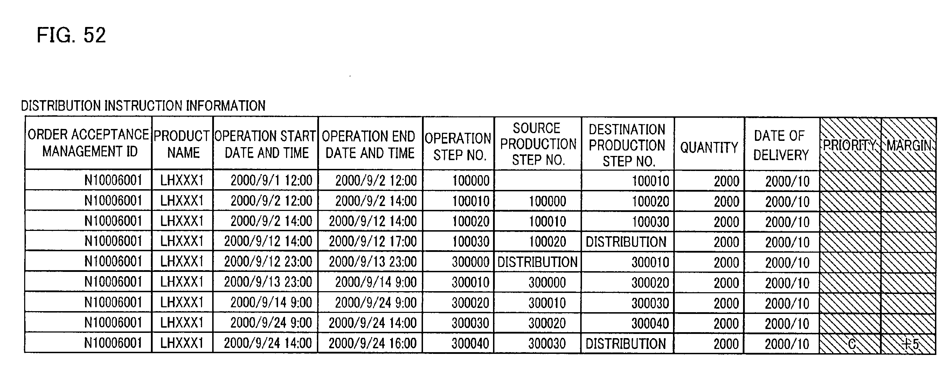

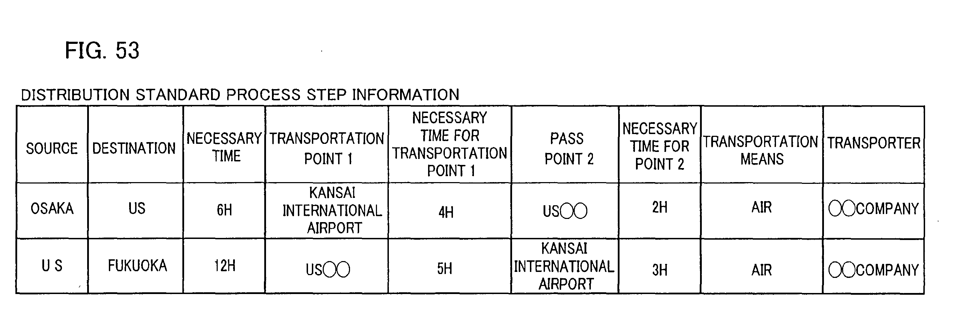

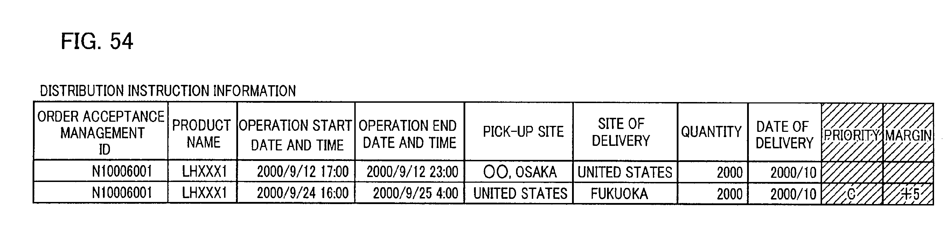

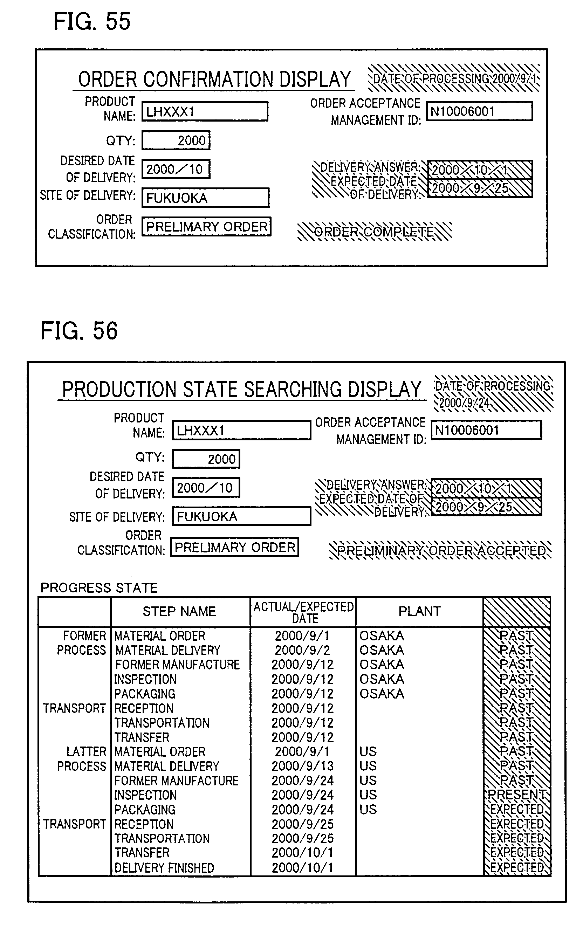

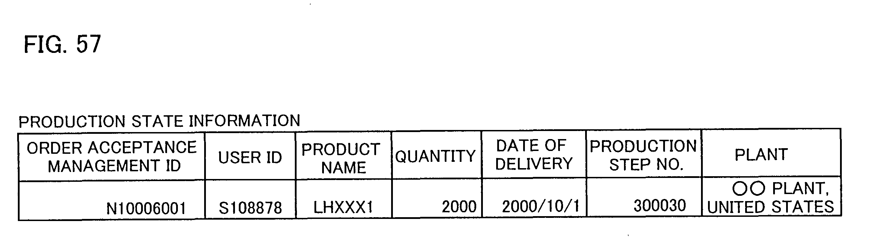

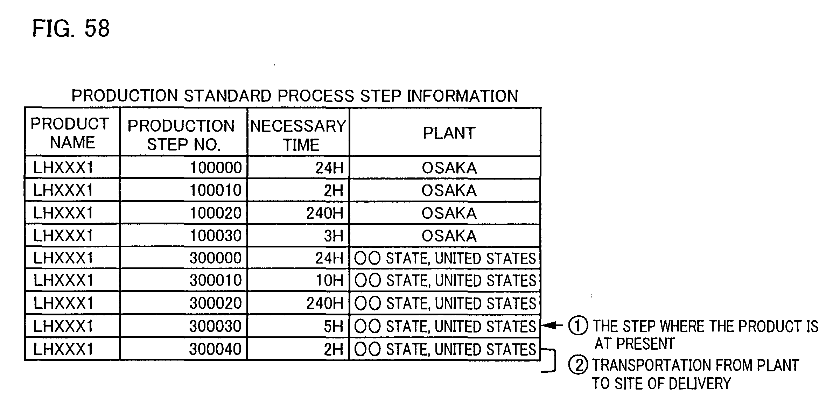

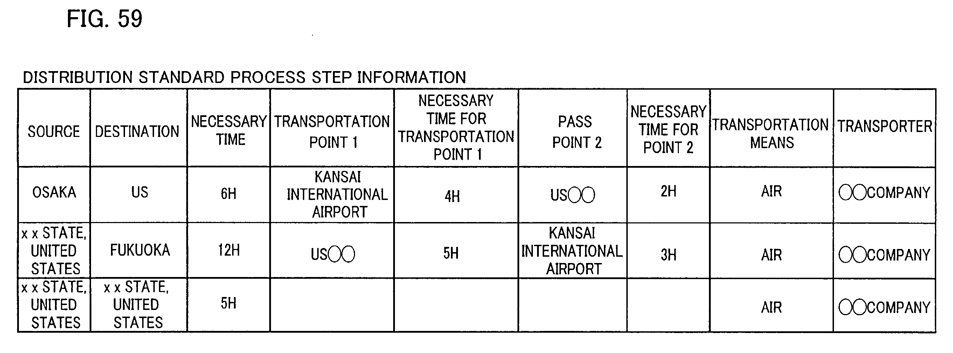

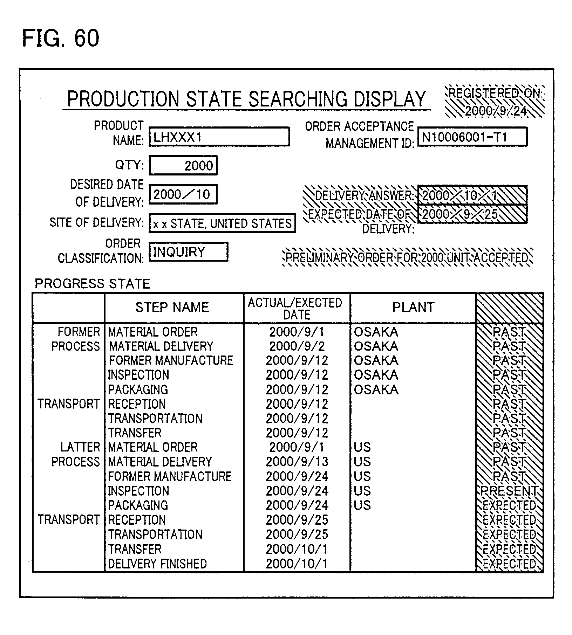

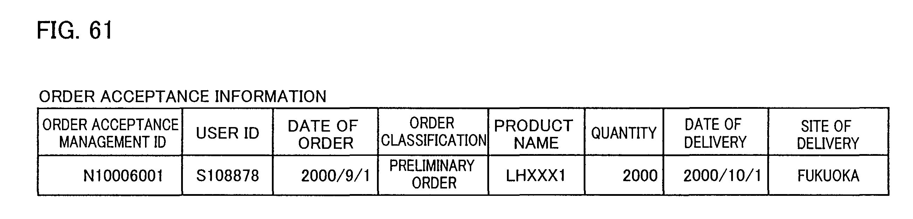

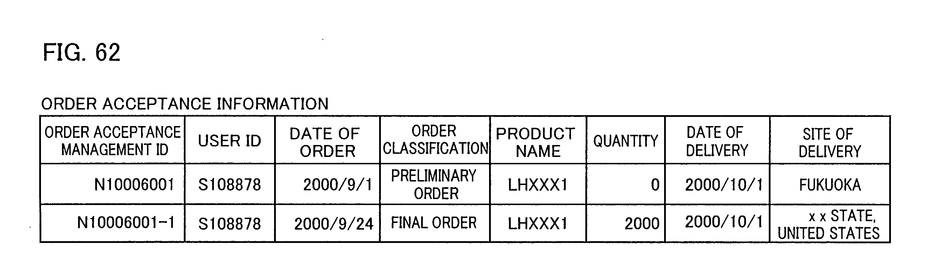

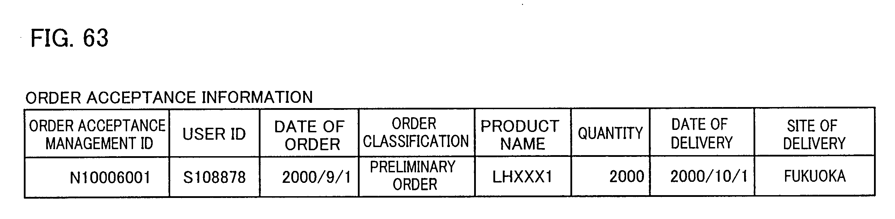

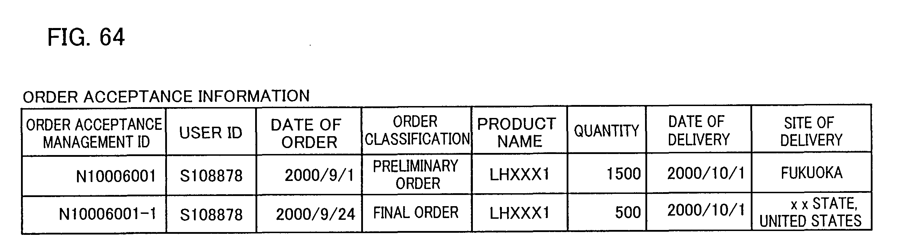

Further, it is assumed that the user places an order of a necessary quantity of a flash memory as a component of a digital camera, using terminal apparatus 200. Figs. 43 to 47 are flow charts of the operation. An example of the operation of the logistics management system will be described with reference to the flow charts, and the numerals in parentheses correspond to the numerals in parentheses in the flow charts.
(1) When the user uses the present system for the first time, the user requests credit investigation by the sales department of the production side by telephone, facsimile, direct meeting, e-mail or electronic medium through the Internet such as the web.
(2) The sales department performs the credit investigation, making reference to the reliability, solvency and the like of the user.
(3) The server manager managing server system 100 receives the result of credit investigation by the sales department. If it is determined that the user is permitted to use the present system, the server manager registers the user ID, password, user name, evaluation level, account, date of opening the account, address, telephone number and the actual amount of transaction with security management DB160, and inform the user of the user ID and the password. When the sales department determines that use of the present system by the user is unacceptable, the user is informed of the unavailability, and it is impossible for the user to proceed to the following steps. At this time, the server manager registers the user information whose access is rejected, as rejection information (E in the evaluation level), with the security management DB16. After this step, it is possible for the user to change the password as needed.
(4) The user to which the user ID and the password have been issued accesses server system 100, using user side terminal apparatus 200 that can be used for ordering a product.
(5) When connection to server system 100 is established, process is performed by central processing unit 111 based on the program for inputting user ID stored in program storing unit 114 of server system 100, and an input display appears, asking entrance of user ID and the password, on display unit 204 of terminal apparatus 200. Therefore, the user operates the operating unit 205 in accordance with the display, and enters the user ID and the password.
   The input data is temporarily stored in the temporary storage through data communication connection apparatus 113 of server system 100 and transmitted to central processing unit 111. As to the manner of input, data may be input through a mobile terminal apparatus and transferred to server system 100.
(6) At the time point when the data is transferred, based on the program stored in program storing unit 114 of schedule control unit 110 of server system 110, the checking process is performed in which the user ID and the password stored in security management DB160 are compared with the user ID and the password received from operating unit 205. Thus, schedule control unit 110 determines whether the user is unauthorized user. When it is found that the user is not unauthorized user as a result of determination, the user cannot proceed to the following steps through the user side terminal apparatus 200.
(7) When it is determined that the user is an authorized user, schedule control unit 110 performs the process of a program for extracting brochure DB150 stored in program storing unit 114. Accordingly, based on the product names stored in brochure DB150, a list of products is displayed on user side terminal apparatus 200 through data communication connecting apparatus 113. When a desired specification (category, use, operation voltage, speed of operation, memory capacity, package type) is input from user side terminal apparatus 200, it is possible for the program for extracting brochure DB to extract from the information stored in brochure DB150, products that can meet the demand, and display the list of products on the user side terminal apparatus 200.
(8) From the list of products, the user selects a product to be ordered, and enters the desired quantity, date of delivery and site of delivery through the ordering display such as shown in Fig. 48. The input data is transferred from user side terminal apparatus 200 to schedule control unit 110 of server system 100. Schedule control unit 110 check whether the contents of the transferred information is correct. The check means determination made in accordance with a program stored in program storing unit 114 of schedule control unit 110 as to whether the transferred information exist in the brochure DB150 and whether the information is acceptable in view of credit as compared with the evaluation level of security DB160. Here, it is assumed that a flash memory is selected as the product. Further, as the date of delivery is not known at this time point, the order is placed as a preliminary order.
(9) After the information of the user (user ID) and the order-acceptance information (date of order, order classification, product name, quantity, date of delivery, site of delivery) as the information entered from user side terminal apparatus 200 are checked, schedule control unit 100 automatically allocates an order-acceptance ID for every order-acceptance information, in accordance with a program stored in program storing unit 114 of schedule control unit 110. Schedule control unit 100 stores the order-acceptance information input from user side terminal apparatus 200 and the automatically allocated order-acceptance management ID and the user ID to order-acceptance information storing unit 121 of user management DB120. The order-acceptance ID is automatically allocated, taking into consideration an already set number, in accordance with a program stored in program storing unit 114 of schedule control unit 110, every time a user places an order through the user side terminal apparatus 200. It is ensured that the order-acceptance ID is unique. The order-acceptance management ID is a number consisting of "company identification code + year and month of order + serial number + secondary number".
(10) The central processing unit of schedule control unit 110 takes the order-acceptance information stored in order-acceptance information storing unit 121 of user management DB120 to temporary storage 112, in accordance with the program stored in program storing unit 114. Based on the order-acceptance information, the central processing unit extracts the corresponding production state information stored in production state information storing unit 131 of production management DB130 and the corresponding distribution state information stored in distribution state information storing unit 141 of distribution management DB140, and similarly writes the extracted information in the temporary storage 112. Based on the extracted corresponding production and distribution state information of the ordered states, the production standard process step information and the distribution standard process step information that had been respectively stored in production standard process step information storing unit 171 and distribution standard process step information storing unit of standard process step DB170 and taken into temporary storage 112 and on the order-acceptance information, the expectation information to be stored in production and distribution progress state/expectation information storing unit 122 of user management DB120, the production instruction information to be stored in production instruction information storing unit 132 of production management DB130 and the distribution instruction information to be stored in distribution instruction information storing unit 142 of distribution management DB140 are respectively found. The results are temporarily stored in temporary storage 112, and then information is recorded on respective DB storing units.
   Further, based on the result of processing by schedule control unit 110, the date of delivery (A) as the expectation information of production and distribution progress state/expectation information storing unit 122 and the desired date of delivery (B) from the user are compared. When (A) < (B), the desired date of delivery from the user is given directly as an answer, as the date of delivery. When (A) ≥ (B), the expected date of delivery is given as an answer of the date of delivery, to the user.
   Based on the result of processing in accordance with a program stored in program storing unit 114 of schedule control unit 110, the date of delivery (A) as the expectation information of production delivery progress state/expectation information storing unit 122 and the desired date of delivery (B) from the user are compared and when (A) < (B), the number of dates as the difference is determined to be margin date for the user's desired date of delivery, and therefore, priority of operation for the production instruction and distribution instruction can be set lower. When (A) > (B), it means that there is a delay from the desired date of delivery from the user. Therefore, it is necessary to set higher priority of operation for the production instruction and the distribution instruction. When (A) = (B) it is determined that the process proceeds as expected. Here, the priority is classified into three stages, that is, "A: high", "B: middle", "C: low". Further, together with setting of priority, the margin date of operation is calculated. The resulting information is recorded for the production instruction information to be stored in production instruction information storing unit 132 of production management DB130 and the distribution instruction information to be stored in distribution instruction information storing unit 142 of distribution management DB140.
   Referring to Figs. 49 and 50, the method of calculating the expected date of delivery to be stored in production and distribution progress state/expectation information storing unit 122 of user management DB120 will be described. Assume that the user places an order on September 1, 2000, specifying the product name "LHXXX1", site of delivery "Fukuoka", desired date of delivery "October, 2000" and quantity "2000" as shown in Fig. 49. First, it is calculated that the time necessary for the overall production process steps for the product "LHXXX1" is 550 hours (24H + 2H + 240H + 3H + 24H + 10H + 240H + 5H + 2H), based on the production standard process step information shown in Fig. 49.
   Thereafter, from the distribution standard process step information shown in Fig. 50, it is calculated that transportation from Osaka plant to a US plant takes 6 hours. Further, it is calculated that transportation from the US plant to the site of delivery, that is, Fukuoka, takes 12 hours. Therefore, the time necessary from placement of the order to delivery is calculated to be 568 hours (550H + 6H + 12H). Now, 568 hours approximately correspond to 24 days. Therefore, by adding 24 days to the date of order, the expected date of delivery is calculated to be September 25, 2000. As a result, "September 25, 2000" is stored in the item of expected date of delivery, in the production delivery/expected information storing unit 122. As the operation will be completed before the user's desired date of delivery, that is, "October, 2000", it is possible to meet the desired date of delivery of the user. As a result, the answer of date of delivery to the user is "October 1, 2000."
   Referring to Figs. 51 to 54, an example of the method of calculating the production instruction information and the distribution instruction information will be described. It is assumed that the user places an order of a product, specifying the product name "LHXXX1", on September 1, 2000, 12:00 specifying the site of delivery "Fukuoka" and desired date of delivery "October, 2000." In accordance with the production standard process step information shown in Fig. 51, the instruction information for the first step No. "100000" for producing the product "LHXXX1" is formed, from the production instruction information shown in Fig. 52. It is known that 24 hours is necessary for the step No. "100000". Therefore, the operation start date and time is set to "September 1, 2000, 12:00", which is the date of order, and the operation end date and time is calculated to be "September 2, 2000, 12:00", that is, after 24 hours. The operation start date and time and the operation end date and time for the step No. "100010" can be calculated in the similar manner.
   The step following the step No. "100010" is "300000", which step is performed in a different production plant, and hence transportation between the plants becomes necessary. From Fig. 53, it can be understood that transportation from Osaka plant to US plant takes 6 hours. Therefore, the distribution instruction information is formed as shown in Fig. 54, in which the operation end date and time "September 12, 2000, 17:00" of the step No. "100030" of the production instruction information is set as the distribution start date and time and "September 12, 2000, 23:00", that is, 6 hours after the start time, is set as the distribution end date and time. Thereafter, in the similar manner, the operation start date and time and the operation end date and time for the production process step No. "300010" to the step "300040" as well as to the distribution step to the site of delivery can be calculated. As a result, the production instruction information and the distribution instruction information are formed.
   Further, schedule control unit 110 extracts the order-acceptance information stored in order-acceptance information storing unit 121 of user management DB120 registered by the user, and based thereon, extracts the corresponding production state information stored in production state information storing unit 131 of production management DB130 and the corresponding distribution state information stored in distribution state information storing unit 141 of distribution management DB140, and based on the extracted production state information and the distribution state information as well as the order-acceptance information, finds the progress state information stored in the production and distribution progress state/expectation information storing unit 122 of user management DB120.
   Further, schedule control unit 110 compares the date of delivery "September 25, 2000" in the expectation information of production and distribution progress state/expectation information storing unit 122 with the user's desired date of delivery "October 1, 2000." From the result of comparison, it is understood that the distribution will be finished before the user's desired date of delivery, and therefore, priority of working is "C". Further, margin date is "+5", that is the difference between October 1 and September 25. As a result, it is calculated that it is possible to meet the demand from the user. The calculated priority information and the margin date information are stored as the production instruction information to be stored in production instruction information storing unit 132 of production management DB130 and the distribution instruction information to be stored in distribution instruction information storing unit 142 of distribution management DB140.
(11) An order confirmation display such as shown in Fig. 55 appears on user side terminal apparatus 200. Thus, it is possible for the user to confirm placement of an order. Here, based on the user ID, the order-acceptance management ID allocated by the schedule control unit for the information ordered by the user and the result of expected date of delivery calculated by the schedule control unit are determined. When the user's desired date of delivery is satisfied, the user's desired date of delivery is set as the answer of the date of delivery displayed on the order confirmation display of user side terminal apparatus 200 through data transmission path connecting apparatus 114. When the user's desired date of delivery is not satisfied, expected date of delivery is set as the answer of the date of delivery displayed on the order confirmation display of the user side terminal apparatus 2000 through data transmission path connecting apparatus 114. When the users desired date of delivery is satisfied, the information of the expected delivery is also displayed simultaneously.
   The distribution side personnel connects the distribution side terminal apparatus 220 to server system 100, receives the distribution instruction information of the product ordered, stored in distribution instruction information storing unit 142, and the information is displayed on the display unit 204 of terminal apparatus 220. Based on the date and time of operation and the contents of operation priority output based on the distribution instruction information, the distribution side personnel starts preparation of the distribution operation including selection of transportation means, arrangement of necessary number of transportation means, procurement of personnel, export/import procedure and so on. It is assumed that the time of operation considering the time for paper work including management materials (export document and the like) necessary for the distribution operation is also stored in distribution standard process step information unit 172 of standard process step DB 170.
(13) The personnel at the domestic production plant for the former process connects the production side terminal apparatus 210 to server system 100, receives the production instruction information of the ordered product stored in production instruction information storing unit 132, and the information is displayed on display unit 204 of terminal apparatus 210. Based on the production instruction information and contents of the output date and time of operation and the operation priority, the personnel starts preparation for the production operation including arrangement of materials, selection of production facility and procurement of personnel. As to the arrangement of materials, it is assumed that the time of operation considering the ordering procedure of materials is stored in the production standard process step information unit 171 of standard process step DB170.
(14) The personnel at the production plant abroad for the latter process similarly connects the production side terminal apparatus 210 to server system 100, receives the production instruction information of the ordered product stored in production instruction information storing unit 132, and the information is displayed on the display unit 204 of terminal apparatus 210. Based on the production instruction information and the contents of the output date and time of operation and the operation priority, the personnel starts preparation of the production process including arrangement of materials, selection of production facility and procurement of personnel. As to the arrangement of materials, similar to the plant for the former half production, it is assumed that the operation time considering the procedure of ordering materials is stored in production standard process step information unit 171 of standard process step DB170.
(15) As the preparation for the production operation has been completed in (13), the personnel at the domestic production plant for the former process starts highly efficient production operation as soon as the materials are delivered. In the production process at the domestic production plant for the former process, the production side terminal apparatus 210 transmits the information of the completed production step No. and the quantity of the product for which operation is completed, in accordance with a program stored in program storing unit 114 of schedule control unit 110, every time a check point for the production process set previously is passed. By a program stored in program storing unit 114 of schedule control unit 110, the transmitted step No. of the completed process and the quantity of the product for which the operation is completed are stored in production state information storing unit 131 and production and distribution progress state/expectation information storing unit 122. Consequently, the production instruction information of production instruction information storing unit 132 of production management DB130 and the production state information of the production state information unit 131 are compared, and it is confirmed from time to time whether there is a delay in operation at every check point of the production process. Thus, the production progress state at the plant for the former production process can be grasped. When there is a delay in operation, personnel at each process step adjusts the production operation, including selection of production facility, procurement of personnel and so on, considering the priority of operation based on the production state information.
(16) When the former process step ends, the production plant is switched to the plant abroad for the latter production process. The distribution side personnel connects the distribution side terminal apparatus 220 to server system 100, receives the distribution instruction information of the product stored in distribution instruction information storing unit 142, and grasps the progress at the domestic plant for the former production process. Then, the distribution side personnel starts the pick-up operation, for transportation of the semi-finished product abroad. When the plant for the latter production process is within the country, domestic transportation takes place.
(17) As the preparation for the distribution operation has been already completed by the process of (12), the distribution personnel transports the semi-finished product from the domestic plant for the former production process to the plant abroad for the latter production process immediately using appropriate transportation means, in accordance with the procedure. In the distribution process, distribution side terminal apparatus 220 transmits the distribution step No. that has been completed and the distribution site information, in accordance with a program stored in program storing unit 114 of schedule control unit 110, every time a pre-set distribution step check point is finished (past). In accordance with a program stored in program storing unit 114 of schedule control unit 110, the transmitted distribution step No. and the distribution site information are stored in distribution state information storing unit 141 and production and distribution progress state/expectation information storing unit 122. As a result, the production instruction information of production instruction information storing unit 142 and production state information of production state information storing unit 141 of distribution management DB140 are compared, and it is confirmed from time to time whether there is a delay in operation at every check point of the distribution process. Thus, the operation progress state in the distribution process can be grasped. When there is a delay in operation, the distribution personnel adjusts the distribution operation including selection of transportation means, arrangement of the number of necessary transportation means, procurement of personnel, preparation of packaging and so on, considering the priority of operation, based on the distribution state information, to reduce the delay. When the operation involves a plurality of operators, information such as the information of the delay is shared among the operators involved, so as to enable selection of optimal distribution means.
(18) The distribution side personnel performs the transfer operation of the semi-finished product to the production plant abroad for the latter production process. Thus, the distribution completion information is stored in the item of current distribution site of distribution state information storing unit 141 and in the item of production distribution detailed state of production and distribution progress state/expectation information storing unit 122.
(19) As the preparation for the production operation has been already completed by the process of (14), the personnel of the plant abroad for the latter production process starts efficient production operation as soon as the materials are delivered. In the process step at the plant abroad for the latter production process, production side terminal apparatus 210 transmits the production step No. of which operation is completed and quantity information, in accordance with a program stored in program storing unit 114 of schedule control unit 110. In accordance with a program stored in program storing unit 114 of schedule control unit 110, the transmitted production step No. and the quantity information are stored in production state information storing unit 131. Thus, the production progress state at the plant for the latter production process can be grasped. When there is a delay in operation, the production operation is adjusted, including selection of production facility, procurement of personnel and so on, considering the priority of operation, to reduce the delay.
(20) Using user side terminal apparatus 200, the user receives the progress state information and the expectation information stored in production distribution storing unit 122 from the server system 100 based on the order-acceptance management ID, and the received information is displayed on display unit 204. Fig. 56 shows an example of the display. Here, it is possible for the user to know that the ordered product is now at the plant abroad for the latter production process. In this manner, it is possible for the user to grasp the progress state of the production and distribution process steps from time to time.
(21) Here, the user notices that a user's plant abroad for manufacturing exist in the same country as the production plant abroad for the latter production process, and the user inquires and confirms whether it is possible to accelerate the date of delivery by changing the distribution destination to the manufacturing plant abroad, with the server system 100. The method of confirmation includes changing the "site of delivery" from "Fukuoka" to "XX state, United States", and change of "order classification" from "preliminary order" to "inquiry", using the user side terminal apparatus.
   At this time, the order-acceptance management ID automatically succeeds the order-acceptance ID of the last time, with only the secondary number changed.
(22) In accordance with a program stored in program storing unit 114 of schedule control unit 110, based on the order-reception information stored in order-reception information storing unit 121 of user management DB120, the production state information stored in production state information storing unit 131 of production management DB130 that stores the progress state information of production state information, the distribution state information stored in distribution information storing unit 141 of distribution management DB140 that stores the progress state information of the distribution state information, and on the production standard process step information and the distribution standard process step information respectively stored in production standard process step information storing unit 171 and the distribution standard process step information storing unit 172 of standard process step DB170, the expectation information stored in production and distribution progress state/expectation information storing unit 122 of user management DB is recalculated, and the result is stored in production and distribution progress state expectation information storing unit 122. Thus, it is possible to confirm, determining from the latest expectation information, how far the operation has been reached as regards the user's order information. Here, a previous set up time for performing the production operation and distribution operation is necessary, and therefore, after the start of set up operation, it is impossible to change the operation of the production step or the distribution step. Therefore, when confirmation of change or request of change is received at a point where operation change is impossible, the information of "change impossible" is stored in production and distribution progress state/expectation information storing unit 122. When it is possible to switch at a point next to the point where operation change is impossible, recalculation of expectation information from this next step point is executed, considering the operation time at the current point.
   Referring to Figs. 57 to 59, the method of calculating the expectation information will be described. Assume that an inquiry of the expected date of delivery where the site of delivery of order-acceptance management ID "N100060001" is changed from "Fukuoka" to "XX state, United States" was made on "September 24, 2000". Referring to Fig. 57, from the production state information, it is understood that the current production step No of the product name "LHXXX1" is "300030" and the plant is "○○ plant, United States." From the production standard process step information shown in Fig. 58, it is calculated that 7 hours is necessary until the end of production at the plant where the product is presently being processed. From the distribution standard process step information shown in Fig. 59, it is understood that 5 hours is necessary for the distribution operation from "○ ○ state, United States" where the plant for the latter production process exist to "XX state, United States" as the site of delivery. Therefore, it is understood that 12 hours (= 7 hours + 5 hours), that is, approximately one day is necessary until the product is delivered from the present process step to the site of delivery. Thus, the expected date of delivery is found to be "September 25, 2000", that is, one day after the date of inquiry "September 24, 2000." Here, as the desired date of delivery of the user is "October 1, 2000", the display of the date of delivery "October 1, 2000" is returned as an answer to the user.
   Schedule control unit 110 calculates and stores the progress state information to be stored in production and distribution progress state/expectation information storing unit 122 of user management DB120, based on the order-acceptance information stored in order-acceptance information storing unit 121 of user management DB120, the production state information stored in production state information storing unit 131 of production management DB130 and the distribution state information stored in distribution state information storing unit 141 of distribution management DB140. For an inquiry, the production instruction information stored in production instruction information storing unit 132 of production management DB130 and the distribution instruction information stored in distribution instruction information storing unit 142 of distribution management DB140 are not overwritten. The reason for this is that an inquiry is a simple operation of confirmation, and any actual instruction for operation is not given to the distribution side and the production side.
(23) Using the user side terminal apparatus 200, the user accesses to the server system 100, the user ID and the password are checked on server system 100, and the user enters the order-acceptance management ID on the displayed dial. Accordingly, the progress state information and the expectation information stored in production and distribution progress state/expectation information storing unit 122 are transmitted to the user side terminal apparatus 200, and by the display (Fig. 60) showing the result of inquiry on display unit 204, it is understood that it is possible to change the site of delivery.
(24) As it is confirmed that change of the destination of delivery is possible, the user changes the order classification of the inquired product to final order, using user side terminal apparatus 200.
(25) In accordance with a program stored in program storing unit 114 of schedule control unit 110, server system 100 receives the change to the final order from user side terminal apparatus 200, and executes the final order processing. Referring to Figs.61 and 62, therefore, it is assumed that in the final order processing, the quantity of 2000 for the preliminary order is fully changed to the final order. At this time, the quantity of preliminary order that has been changed to the final order processing is automatically changed to 0, based on the order-acceptance management ID of preliminary order, in accordance with a program stored in program storing unit 114 of schedule control unit 110. As to the order-acceptance management ID of the finally ordered product, the order-acceptance management ID of the preliminary order that has been changed to the final order with the secondary number automatically added is stored in order-acceptance information storing unit 121. Referring to Figs. 63 and 64, when 500 units are processed as final order, the quantity of preliminary order is automatically set to 1500 by schedule control unit 110.
(26) In accordance with a program stored in program storing unit 114 of schedule control unit 110, based on the order-acceptance information stored in order-acceptance information storing unit 121 of user management DB120, the production state information stored in production state information storing unit 131 of production management DB130, the distribution state information stored in distribution state information storing unit 141 of distribution management DB140 and the production standard process step information and the distribution standard process step information respectively stored in production standard process step information storing unit 171 and distribution standard process step information storing unit 172 of standard process step DB170, the expectation information to be stored in production and distribution progress state/expectation information storing unit 122 of user management DB120, the production instruction information to be stored in production instruction information storing unit of production management DB130 and the distribution instruction information to be stored in distribution instruction information storing unit 142 of distribution management DB140 and stored. The details are the same as those described in (10). Therefore, description thereof will not be repeated here.
   In accordance with a problem stored in program storing unit 114 of schedule control unit 110, based on the order-acceptance information stored in order-acceptance information storing unit 121 of user management DB120, the production state information stored in production state information storing unit 131 of production management DB130 and the distribution state information stored in distribution state information storing unit 141 of distribution management DB140, the progress state information stored in production and distribution progress state/expectation information storing unit 122 of user management DB120 is calculated and stored. At this time, the progress state is checked so as to see whether there is a delay in the production instruction and distribution instruction information. When there is any problem, appropriate adjustment is performed.
(27) The user confirms completion of the final order by the user side terminal apparatus 200. At this time, user side terminal apparatus 200 also receives the order-acceptance management ID and the information of the expected date of delivery corresponding to the contents of the order placed by the user.
(28) Distribution side personnel connects the distribution side terminal apparatus 220 to server system 100, receives the distribution instruction information of the product of which site of delivery is changed, stored in distribution instruction information storing unit 142, which received information is displayed on display unit 204 of distribution side terminal apparatus 220. Thereafter, the personnel starts the change of the preparation operation performed in (12). Thus, the distribution side is timely informed of the change information, and hence operation can be executed based on the latest information.
(29) The step of latter production process is finished in accordance with the production instruction information. The production side terminal apparatus 210 transmits the production step No. of which operation is completed and quantity information to schedule control unit 110. Schedule control unit 110 has the transmitted production step No. and the quantity information stored in production state information storing unit 131.
(30) As the preparation for the distribution operation has been already completed in (28), the distribution side personnel starts the operation of transporting the finished product from the plant abroad for the latter production process to the site of delivery using appropriate transportation means immediately. In the distribution process, the distribution side terminal apparatus 200 transmits the distribution step No. of which operation is completed and the distribution site information in accordance with a program stored in program storing unit 114 of schedule control unit 110, every time a preset check point for the distribution process is finished (past). In accordance with a program stored in program storing unit 114 of schedule control unit 110, the transmitted distribution step No. and the distribution site information are stored in distribution state information storing unit 141 and production and distribution progress state/expectation information storing unit 122.
(31) Using the user site terminal apparatus 200, the user confirms the progress state information and the expectation information stored in the production and distribution progress state/expectation information storing unit 122 based on the order-acceptance management ID, and finds that the ordered product is now being transported to the manufacturing plant abroad of the user side.
(32) The user prepares for reception at the manufacturing plant abroad of the user.
(33) The distribution side personnel transports the ordered product to the manufacturing plant abroad of the user, as the site of delivery, and transfers the product to the user while confirming the order-acceptance management ID, the quantity and the product name.
(34) Using the distribution side terminal apparatus 220, the distribution side personnel establishes a connection to server system 100, and transmits information notifying that delivery to the user is completed, to server system 100.
(35) Schedule control unit 110 have the distribution completion information received from distribution side terminal apparatus 220 to production and distribution progress state/expectation information storing unit 122 of user management DB120 and the distribution state information storing unit 141 of distribution management DB140.
(36) The production side personnel, the distribution side personnel and the user establish connection to server system 100 by respective terminal apparatuses 210, 220 and 200, confirm the progress state information and the expectation information stored in production and distribution progress state/expectation information storing unit 122, and recognize that delivery is completed.

By the above described series of operations, the product is delivered to the user. It is assumed that the production side personnel and the distribution side personnel must go through the previous credit investigation and previous registration for security, and security must be checked by a password, similar to those requested for the user, when establishing a connection to server system 100.

Various databases DB120 to 170 of server system 100 may be provided outside the server system. Namely, it may be provided on the user side, the distribution side or the production side.

In the program storing unit of the schedule control means, a program is stored which recalculates the expectation information and the progress state information to be stored in the production and distribution progress state/expectation information storing unit 122 of user management DB120 by a prescribed unit period (for example, by the unit of a day), in addition to the recalculation when preliminary order is placed, a final order is placed and an inquiry is made. Therefore, it is possible for the user to search for the daily updated expectation information and the progress state information, and it is possible for the production side personnel and the distribution side personnel to start operations based on the priority level.

In the program storing means of the schedule control means, a program simultaneously calculating the progress state information, the expectation information, the production instruction information and the distribution instruction information may be stored. Here, the program storing means stores a program that controls the progress state information, the expectation information, the production instruction information and the distribution instruction information, based on the order-acceptance information, the production state information, the distribution state information, the production standard process step information and the distribution standard process step information.

As described above, according to the present embodiment, the schedule control unit controls the expectation information, the distribution instruction information and the production instruction information, based on the order-acceptance information, the distribution state information, the production state information, the production standard process step information and the distribution standard process step information. Therefore, the progress from placement of an order by the user for a product, through production and distribution to completion of delivery can be controlled in a centralized manner. Thus, it becomes possible to make optimal production plan and distribution plan, and to efficiently make use of the production facility, labor and transportation means.

The schedule control unit also controls the progress state information based on the order-acceptance information, the distribution state information and the production state information. Therefore, it is possible for the user, for the production side personnel and the distribution side personnel to directly confirm the progress state information of production or distribution, by accessing to the progress state information, the production state information and the distribution state information.

When the capacity of production and distribution is too small, a plurality of production bases and a plurality of distributers are selected, and calculation is performed to satisfy the desired date of delivery of the user. This function is generally understood as existing common practice in the production distribution activities.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A server apparatus, comprising:
a receiving circuit receiving order-acceptance information from a user;
a user management database having an order-acceptance information storing unit storing said order-acceptance information and a production distribution expectation information storing unit storing expectation information of production and distribution;
a production management database having a production state information storing unit storing production state information and production instruction information storing unit storing production instruction information;
a distribution management database having a distribution state information storing unit storing distribution state information and a distribution instruction information storing unit storing distribution instruction information;
a standard process step database having a production standard process step information storing unit storing production standard process step information and a distribution standard process step information storing unit storing distribution standard process step information; and
a schedule control unit connected to said receiving circuit, said user management database, said production management database, said distribution management database and said standard process step database, and based on said order-acceptance information, controlling said distribution state information, said production state information, said production standard process step information and said distribution standard process step information, controlling said expectation information, said distribution instruction information and said production instruction information.

2. The server apparatus according to claim 1, further comprising a transmitting circuit externally transmitting said expectation information stored in said production distribution expectation information storing unit.

3. The server apparatus according to claim 1, wherein
said schedule control unit forms an order-acceptance ID for every order, and manages said user management database, said production management database and said distribution management database, based on the order-acceptance management ID.

4. The server apparatus according to claim 3, wherein
said order-acceptance information includes information of a product name, quantity, date of delivery and site of delivery corresponding to each said order-acceptance management ID.

5. The server apparatus according to claim 4, wherein
said order-acceptance information further includes order classification information distinguishing preliminary order, final order and inquiry.

6. The server apparatus according to claim 4, wherein
said schedule control unit changes quantity of preliminary order to a value reduced by quantity of final order, when there is a change from a preliminary order to a final order in order-acceptance information from a user.

7. The server apparatus according to claim 3, wherein
said production state information includes information of production state identifying present step of progress of production corresponding to each said order-acceptance management ID.

8. The server apparatus according to claim 7, wherein
said production state information further includes product name, quantity and date of delivery corresponding to each said order-acceptance management ID.

9. The server apparatus according to claim 3, wherein
said distribution state information includes distribution state identifying present step of progress of distribution corresponding to each said order-acceptance management ID.

10. The server apparatus according to claim 9, wherein
said distribution state information includes information of product name, quantity, site of pick-up, present site of distribution, site of delivery and distribution means for transporting ordered product, corresponding to each said order-acceptance management ID.

11. The server apparatus according to claim 3, wherein
said schedule control unit adds a secondary number to the order-acceptance management ID, when order-acceptance information from a user represents an inquiry or a final order.

12. The server apparatus according to claim 1, wherein
said expectation information includes information of expected date of delivery corresponding to each said order-acceptance management ID.

13. The server apparatus according to claim 1, wherein
said production instruction information includes information of product name, quantity, date of delivery, operation start date and time and operation end date and time, corresponding to each said order-acceptance management ID.

14. The server apparatus according to claim 13, wherein
said production instruction information further includes information of pre-production step, production operation step and post production step corresponding to each said order-acceptance management ID.

15. The server apparatus according to claim 1, wherein
said distribution instruction information includes information of product name, quantity, date of delivery, site of pick-up, site of delivery, distribution operation start date and time and distribution operation end date and time, corresponding to each said order-acceptance ID.

16. The server apparatus according to claim 1, wherein
said production standard process step information includes information of production process number and necessary time for each process step, corresponding to a product name.

17. The server apparatus according to claim 1, wherein
said distribution standard process step information includes time from a source to destination of transportation, time necessary from a pass point to a destination of transportation, and information of transportation means.

18. The server apparatus according to claim 1, further comprising
a security management database storing security information related to a user.

19. The server apparatus according to claim 18, wherein
said security information includes information related to a user identifier, a password and information related to the user, for every user.

20. The server apparatus according to claim 19, wherein
said schedule control unit compares a user ID and a password stored in said security information management database with a user ID and a password transferred from a user side terminal apparatus, to determine whether the user is an authorized user.

21. The server apparatus according to claim 1, further comprising
a product information database for introducing information of an ordered product to a user.

22. The server apparatus according to claim 1, wherein
said schedule control unit controls, when there is an inquiry on order-acceptance information by a user, said expectation information based on said inquired order-acceptance information, said distribution state information, said production state information, said production standard process step information and said distribution standard process step information, and does not control said production instruction information and said distribution instruction information.

23. The server apparatus according to claim 1, wherein
said schedule control unit controls said expectation information, said distribution instruction information and said production instruction information, based on said order-acceptance information, said distribution state information, said production state information, said production standard process step information and said distribution standard process step information, when order-acceptance information from a user is a preliminary order or a final order.

24. A method of logistics management used in the server apparatus according to claim 1, comprising the steps of:
receiving order-acceptance information from a user side terminal apparatus;
writing said received order-acceptance information to a user management database; and
based on said order-acceptance information, distribution state information managed by the distribution management database, production state information managed by the production management database and production standard process step information and distribution standard process step information managed by the standard process step database, controlling, by the schedule control unit, the expectation information of production and distribution managed by said user management database, the production instruction information managed by said production management database and the production instruction information managed by said distribution management database.

25. The method of logistics management according to claim 24, further comprising the steps of:
storing result of a distribution operation performed in accordance with said distribution instruction information in said distribution state information storing unit, through a distribution side terminal apparatus; and
storing result of a production operation performed in accordance with said production instruction information in said production state information storing unit through a production side terminal apparatus.

26. The method of logistics management according to claim 24, wherein
said step of control forms an order-acceptance management ID for every order-acceptance information, and manages said user management database, said production management database and said distribution management database, based on said order-acceptance management ID.

27. A computer readable recording medium, recording a logistics management program to execute the method of logistics management according to claim 24 on a computer.

28. A logistics management system, comprising:
a server apparatus according to claim 1;
a user side terminal apparatus connected to said server apparatus through a communication circuit, transmitting order-acceptance information of a product to said server apparatus, and based on said progress state information and/or expectation information received from said server apparatus, outputting progress state information and/or expectation information of production and distribution of said ordered product;
a production side terminal apparatus connected to said server apparatus through a communication circuit, outputting said production instruction information, and writing results of a production operation performed in accordance with the output production instruction information, to said production state information storing unit; and
a distribution side terminal apparatus connected to said server apparatus through a communication circuit, outputting said distribution instruction information, and writing result of a distribution operation performed in accordance with the output distribution instruction information to said distribution state information storing unit.

29. A user side terminal apparatus used in the logistics management system according to claim 28, comprising
a transmitting circuit transmitting order-acceptance information to said order-acceptance information storing unit; and
a receiving circuit receiving said progress state information and/or said expectation information.

30. A production side terminal apparatus used in the logistics management system according to claim 28, comprising:
a receiving circuit receiving said production instruction information, said progress state information and/or said expectation information; and
a transmitting circuit transmitting result of a production operation performed in accordance with said received production instruction information to said production state information storing unit.

31. A distribution side terminal apparatus used in the logistics management system according to claim 28, comprising:
a receiving circuit receiving said distribution instruction information, said progress state information and/or said expectation information; and
a transmitting circuit transmitting result of a distribution operation performed in accordance with said received distribution instruction information to said distribution state information storing unit.

32. The terminal apparatus according to claim 31, wherein
said distribution side terminal apparatus is a mobile terminal apparatus.

33. A server apparatus, comprising:
a receiving circuit receiving order-acceptance information from a user;
a user management database having an order-acceptance information storing unit storing said order-acceptance information and a production and distribution progress state information storing unit storing progress state information of production and distribution;
a production management database having a production state information storing unit storing production state information;
a distribution management database having a distribution state information storing unit storing distribution state information; and
a schedule control unit connected to said receiving circuit, said user management database, said production management database and said distribution management database, and controlling said progress state information based on said order-acceptance information, said distribution state information and said production state information.

34. The server apparatus according to claim 33, wherein said progress state information of production and distribution includes information of corresponding production distribution detailed state information for each said order-acceptance management ID.

35. The server apparatus according to claim 34, wherein
said progress state information of production and distribution further includes information of product name, quantity, desired date of delivery and scheduled site of delivery corresponding to each said order-acceptance management ID.

36. The server apparatus according to claim 34, wherein
said progress state information of production and distribution further includes order classification information for distinguishing preliminary order, final order and inquiry for each said order-acceptance management ID.

37. The server apparatus according to claim 33, further comprising a transmitting circuit externally transmitting said progress state information stored in said production and distribution progress state information storing unit.

38. A method of logistics management used in the server apparatus according to claim 33, comprising the steps of:
receiving order-acceptance information from a user side terminal apparatus;
writing said received order-acceptance information in the user management database; and
based on said order-acceptance information, distribution state information managed by the distribution management database and production state information managed by the production management database, controlling, by a schedule control unit, progress state information of production and distribution managed by said user management database.

39. A server apparatus, comprising:
a receiving circuit receiving order-acceptance information from a user;
a user management database having an order-acceptance information storing unit storing said order-acceptance information and a production and distribution progress state/expectation information storing unit storing progress state information and expectation information of production and distribution;
a production management database having a production information storing unit storing production state information and a production instruction information storing unit storing production instruction information;
a distribution management database having a distribution information storing unit storing distribution state information and a distribution instruction information storing unit storing distribution instruction information;
a standard process step database having a production standard process step information storing unit storing production standard process step information and a distribution standard process step information storing unit storing distribution standard process step information; and
a schedule control unit connected to said receiving circuit, said user management database, said production management database, said distribution management database and said standard process step database, and controlling said progress state information, said expectation information, production instruction information and distribution instruction information, based on said order-acceptance information, said distribution state information, said production state information, said production standard process step information and said distribution standard process step information.

40. The server apparatus according to claim 39, further comprising a transmitting circuit externally transmitting said progress state information and said expectation information stored in said production and distribution progress state/expectation information storing unit.

41. A method of logistics management used in the server apparatus according to claim 39, comprising the steps of:
receiving order-acceptance information from a user side terminal apparatus;
writing said received order-acceptance information to the user management database; and
based on said order-acceptance information, distribution state information managed by the distribution management database, production state information managed by the production management database and production standard process step information and distribution standard process step information managed by the standard process step database, controlling, by the schedule control unit, progress state information and expectation information of production and distribution managed by said user management database, production instruction information managed by said production management database and distribution instruction information managed by said distribution management database.

42. A schedule control apparatus, comprising:
a program storing apparatus storing a program;
a central processing unit for executing a process in accordance with the program stored in said program storing apparatus;
a temporary storage for temporarily storing contents processed by said central processing unit; and
a connecting circuit for inputting/outputting order-acceptance information from a user, present production state information corresponding to said order-acceptance information, present distribution state information corresponding to said order-acceptance information and progress state information corresponding to said order-acceptance information; wherein
said program storing apparatus stores a program controlling progress state information of production and distribution, based on said order-acceptance information, said production state information and said distribution state information.

43. The schedule control apparatus according to claim 42, wherein
said program storing apparatus stores a program for forming an order-acceptance management ID for every order.

44. The schedule control apparatus according to claim 42, wherein
said program storing apparatus stores a program for recalculating said progress state information in a prescribed unit time period.

45. The schedule control apparatus according to claim 42, wherein
said program storing apparatus stores a program for changing quantity of preliminary order to a value obtained by subtracting quantity of final order from the quantity of the preliminary order.

46. A schedule control apparatus, comprising:
a program storing apparatus storing a program;
a central processing unit executing a process in accordance with the program stored in said program storing apparatus;
a temporary storage for temporarily storing contents of processing by said central processing unit; and
a connecting circuit for inputting/outputting order-acceptance information from a user, production state information corresponding to said order-acceptance information, distribution state information corresponding to said order-acceptance information, production standard process step information representing time necessary for each production step, distribution standard process step information representing time necessary for each distribution step, expectation information corresponding to said order-acceptance information, production instruction information instructing a producer, and distribution instruction information instructing a distributor; wherein
said program storing apparatus stores a program controlling said expectation information, said production instruction and said distribution instruction information simultaneously, based on said order-acceptance information, said production state information, said distributions state information, said production standard process step information and said distribution standard process step information.

47. A schedule control apparatus according to claim 46, wherein
said program storing unit stores a program for controlling said expectation information, said production instruction information and said distribution instruction information, based on said order-acceptance information, said production state information, said distribution state information, said production standard process step information and said distribution standard process step information, when a user a preliminary order or a final order, and
controlling said expectation information based on said order-acceptance information, said production state information, said distribution state information, said production standard process step information and said distribution standard process step information, when a user a preliminary order or a final order, and not controlling said production instruction information and said distribution instruction information.

48. The schedule control apparatus according to claim 46, wherein
said program storing apparatus stores a program for recalculating said expectation information, said production instruction information and said distribution instruction information in a prescribed unit time period.

49. The schedule control apparatus according to claim 46, wherein
said program storing apparatus stores a program comparing desired date of delivery of a user and expected date of delivery included in said expectation information, and answering date of delivery based on the result of comparison.

50. The schedule control apparatus according to claim 46, wherein
said program storing apparatus stores a program comparing desired date of delivery of a user and expected date of delivery included in said expectation information, and setting operation priority for production instruction and distribution instruction.

51. A schedule control apparatus, comprising:
a program storing apparatus storing a program;
a central processing unit executing a process in accordance with the program stored in said program storing apparatus;
a temporarily storage for temporarily storing contents of processing by said central processing unit; and
a connecting circuit for inputting/outputting order-acceptance information from a user, progress state information corresponding to said order-acceptance information, production state information corresponding to said order-acceptance information, distribution state information corresponding to said order-acceptance information, production standard process step information representing time necessary for each production step, distribution standard process step information representing time necessary for each distribution step, expectation information corresponding to said order-acceptance information, production instruction information instructing a producer, and distribution instruction information instructing a distributer; wherein
said program storing apparatus stores a program controlling said progress state information, said expectation information, said production instruction and said distribution instruction information simultaneously, based on said order-acceptance information, said production state information, said distributions state information, said production standard process step information and said distribution standard process step information.

52. A computer program comprising program code means adapted to perform all of the steps of the method according to any of claims 24 to 26, 38 and 41 when run on a server apparatus.
